(19) Europäisches Patentamt / European Patent Office / Office européen des brevets

(11) **EP 3 187 853 A1**

(12) **DEMANDE DE BREVET EUROPEEN**

(43) Date de publication:
**05.07.2017 Bulletin 2017/27**

(21) Numéro de dépôt: **16207230.0**

(22) Date de dépôt: **29.12.2016**

(51) Int Cl.:
***G01N 13/02*** *(2006.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **04.01.2016 FR 1650002**

(71) Demandeur: **TECLIS**
**69160 Tassin la Demi-Lune (FR)**

(72) Inventeurs:
• **CAGNA, Alain**
**42110 FEURS (FR)**
• **ESPOSITO, Gérard**
**69450 SAINT CYR AU MONT D'OR (FR)**

(74) Mandataire: **Nony**
**11 rue Saint-Georges**
**75009 Paris (FR)**

(54) **SYSTEME ET PROCEDE D'ANALYSE DE L'INTERACTION ENTRE UNE GOUTTE DE FLUIDE ET UNE AUTRE GOUTTE OU UNE SURFACE SOLIDE**

(57) Système et procédé d'analyse de l'interaction entre une goutte de fluide non miscibles dans un milieu ambiant et une surface, cette surface étant une autre goutte de fluide ou bien alternativement une surface solide. Le système comprend en outre des moyens de traitement (40) adaptés pour déterminer en fonction de données collectées par un dispositif (30) d'acquisition et de traitement d'image une valeur de tension interfaciale de la goutte (G, G1, G2) après un contact entre la goutte (G, G1, G2) et la surface (G2, S), et une valeur de différence de pression entre la pression interne de la goutte (G, G1, G2) et la pression dans le milieu ambiant (M) sans avoir besoin de connaitre la position de l'apex de la goutte (G, G1, G2). Dispositif de formation et de mise en contact de gouttes et dispositif de formation et de mise en contact d'une goutte de fluide avec une surface solide en vue de leur analyse par le système approprié.

Fig.7

**Description**

Domaine technique

La présente invention concerne le domaine de l'analyse des fluides à partir des effets de surface.

Plus particulièrement, la présente invention a pour objet un dispositif de formation et de mise en contact de gouttes de fluides non miscibles dans un milieu ambiant ou bien alternativement un dispositif de formation et de mise en contact d'une goutte avec une surface solide, un système et un procédé d'analyse de l'interaction entre une goutte de fluide non miscible dans un milieu ambiant et une autre goutte de fluide ou bien alternativement entre une goutte de fluide et une surface solide.

Etat de la technique

Le comportement à l'interface d'un fluide disposé dans un milieu ambiant dans lequel le fluide n'est pas miscible est intimement lié à la tension qui s'exerce à l'interface entre ce fluide et le milieu ambiant.

Un milieu ambiant est un milieu également fluide dans lequel le fluide considéré est plongé.

Le terme de « tension interfaciale » est généralement employé lorsque le fluide et le milieu ambiant sont denses, par exemple le fluide et le milieu ambiant sont tous les deux liquides.

Le fluide forme alors une goutte dans le milieu ambiant.

Le terme de « tension superficielle » est généralement employé lorsque le fluide et le milieu ambiant présentent un écart de densité important, par exemple lorsqu'un des fluides est un gaz et que l'autre des fluides est un liquide.

Le fluide forme alors une goutte dans le milieu ambiant lorsque le fluide est un liquide et que le milieu ambiant est un gaz, et le fluide forme une bulle dans le milieu ambiant lorsque le fluide est un gaz et que le milieu ambiant est un liquide.

Dans la suite de la description, le terme « goutte » est employé pour désigner aussi bien une goutte qu'une bulle, et le terme « tension interfaciale » est employé pour désigner aussi bien la tension interfaciale que la tension superficielle.

La tension interfaciale représente l'énergie nécessaire à la création d'une interface. Donc, à l'équilibre thermodynamique, la tension interfaciale traduit l'énergie mise en oeuvre par les forces de cohésion inter-moléculaires entre le fluide et le milieu ambiant pour maintenir cette interface stable.

Cette énergie résulte du produit de la tension interfaciale par la surface totale de l'interface.

La tension interfaciale a la dimension d'une force par unité de longueur, et s'exprime par exemple en Newton/m ou en milliNewton/m.

Certains agents chimiques présents sur l'interface peuvent modifier la structure de l'interface et par suite la valeur de la tension interfaciale. Ces agents sont alors dits "tensio-actifs".

La mesure des tensions interfaciales peut donc servir à évaluer l'activité tensioactive de certains agents chimiques, ou indirectement à mesurer la concentration de surface de ces agents chimiques.

Les applications de ces mesures sont nombreuses, notamment dans les industries pétrolières, pharmaceutiques, chimiques, alimentaires, cosmétiques, etc.

A titre d'exemple, ces mesures sont utiles pour la mise au point de détergents ou d'émulsifiants efficaces ; elles sont utiles pour la mise au point de produits de dispersion du pétrole brut en cas de marée noire, ou encore pour l'étude de réactions physiologiques enzymatiques.

Il est connu de calculer la valeur de la tension interfaciale entre un fluide et un milieu ambiant par la technique dite de la goutte pendante ou de la goutte posée.

Le terme « goutte pendante » est généralement employé lorsqu'une goutte de fluide est suspendue à l'extrémité d'un tube capillaire orientée en direction du sol.

Cependant, le terme de « goutte montante » peut être plus approprié lorsque la goutte subie la poussée d'Archimède dans un milieu ambiant liquide et que l'extrémité du tube capillaire qui retient la goutte est orientée en direction de la surface du liquide.

Le terme de « goutte posée » est quant à lui employé lorsqu'une goutte de fluide est posée sur une surface solide.

Par ailleurs, seule la technique de la goutte pendante est décrite, la technique de la goutte posée s'appliquant par analogie.

Cette technique est basée sur l'analyse de la forme du contour du profil d'une goutte de révolution disposée dans un milieu ambiant transparent.

A partir de l'analyse d'une image d'une goutte pendante formée à l'extrémité d'un tube capillaire et après intégration numérique de la position des points formant le contour du profil, il est possible de déterminer la tension interfaciale s'exerçant à l'interface de la goutte et du milieu ambiant.

La goutte prend une forme qui résulte de l'équilibre entre les forces de pesanteur et la tension interfaciale, et de la poussée d'Archimède lorsque le milieu ambiant est liquide.

Les effets de la tension interfaciale ont tendance à conférer à la goutte une forme sphérique pour minimiser sa surface et donc son énergie, tandis que les effets de la gravitation ont tendance à l'allonger pour lui donner une forme de poire dans le cas d'une goutte pendante.

En analysant la forme et les dimensions de la goutte, on peut déterminer d'une manière absolue la valeur de la tension interfaciale.

En effet, il existe une relation entre la valeur de la tension interfaciale et les paramètres géométriques caractérisant la forme de la goutte.

Cette relation obéit à la loi de Laplace liant la courbure locale de l'interface séparant deux milieux à la différence de pression entre ces deux milieux.

La loi de Laplace est définie par une équation dite "de Laplace-Young" :

$$(1) \qquad \Delta P = \gamma \left( \frac{1}{R} + \frac{1}{R'} \right)$$

En l'absence de forces extérieures autre que la gravité, la pression varie linéairement en fonction de l'altitude :

$$(2) \qquad \Delta P = \Delta P_0 - (\Delta \rho) g z$$

Où:

- $\Delta P$ est la différence de pression entre les deux fluides au niveau du plan d'analyse,
- $\Delta P_0$ est la différence de pression entre les deux fluides au niveau de l'apex,
- $\gamma$ est la tension interfaciale,
- $R$ et $R'$ les rayons de courbure principaux de la surface au point où l'on mesure la différence de pression.

L'équation de Laplace n'admet pas de solution analytique pour l'obtention de la valeur de la tension interfaciale. Elle ne peut donc être résolue que de manière numérique.

L'intégration numérique de l'équation de Laplace est réalisée en utilisant des conditions initiales à l'apex de la goutte, l'apex étant le seul point du contour de la goutte où les rayons de courbure sont tous égaux.

Pour des raisons de symétrie de révolution, il est aisé de se placer dans un plan méridien défini par l'image de la goutte et on appelle « profil » de la goutte la courbe méridienne définissant le contour de la goutte.

On utilise dans ce plan méridien un repère d'origine l'apex de la goutte, qui sera donc d'altitude $z_0 = 0$.

On désigne par b la moyenne arithmétique des courbures principales au point d'altitude $z_0 = 0$ soit :

$$2b = \left( \frac{1}{R_0} + \frac{1}{R_0'} \right)$$

Vu l'égalité des rayons de courbure, b devient la courbure à l'apex.

En désignant par s l'abscisse curviligne sur le profil avec l'origine à l'apex et en remarquant qu'au point d'altitude z(s) que $R'(s) = \dfrac{x(s)}{\sin \theta (s)}$ où $R'(s)$ est le rayon de courbure au point M(s) dans le plan perpendiculaire et que $R(s) = \dfrac{ds}{d\theta}$ où le $R(s)$ est le rayon de courbure au point M(s) dans le plan méridien, on en déduit des équations (1) et (2) qu'en tout point d'altitude z(s) :

$$2b\gamma = \gamma \left( \frac{d\theta}{ds} + \frac{\sin \theta}{x} \right) + \Delta \rho g z$$

En posant $c = \dfrac{g\Delta\rho}{\gamma}$ où c est la constante de capillarité, on obtient la première version de l'équation non linéaire de Laplace :

$$(3) \qquad \frac{1}{x(s)}\frac{d}{dx}\big(x(s)\sin(\theta(s))\big) = 2b - cz(s)$$

Cette équation dépend de quatre paramètres :

*s* : est l'abscisse curviligne (en mm) du point M de coordonnées [x(s), z(s)]

$\theta(s)$ : est l'angle polaire de la tangente orientée en M(s) avec l'axe $O_x$,

*b* : est la courbure moyenne à l'apex en $mm^{-1}$

c : est la constante de capillarité $c = \dfrac{g\Delta\rho}{\gamma}$ en $mm^{-2}$ où $\gamma$ est la tension interfaciale en mN/m, g est l'accélération terrestre en $m/s^2$ et $\Delta\rho$ est la différence de masse volumique entre les deux fluides en kg/l ou $g/cm^3$.

La représentation normale du contour du profil à l'aide de l'abscisse curviligne s ayant comme origine l'apex de la goutte donne le système différentiel suivant qui représente la forme mathématique de l'équation non linéaire de Laplace (3) :

$$(4) \qquad [E]: \begin{cases} \dfrac{dx}{ds} = \cos\theta \\[2mm] \dfrac{dz}{ds} = \sin\theta \\[2mm] \dfrac{d\theta}{ds} = 2b - \dfrac{\sin\theta}{x} - cz \end{cases}$$

Avec pour conditions initiales à l'apex :

$$[EC_0]: \begin{cases} x(0) = 0 \\ z(0) = 0 \\ \theta(0) = 0 \end{cases}$$

La résolution de cette équation est basée sur l'estimation seulement des deux paramètres physiques b (courbure à l'apex) et c (constante de capillarité).

La méthode de la goutte pendante est couramment utilisée, précise et reproductible.

Néanmoins, une condition critique et indispensable pour la précision et la pertinence des mesures consiste à connaitre très précisément les coordonnées de l'apex de la goutte.

Cependant, dans beaucoup de situations expérimentales, il est difficile voire impossible d'obtenir ces coordonnées. Dans de telles situations, la méthode décrite ci-dessus devient inapplicable.

Une de ces situations pourrait consister à mettre en contact une goutte d'un premier fluide suspendue à un premier tube capillaire et une goutte d'un deuxième fluide suspendue à un deuxième tube capillaire disposés tous les deux dans un milieu ambiant.

Une autre de ces situations pourrait consister à mettre en contact une goutte d'un fluide suspendue à un tube capillaire avec une surface solide.

Dans de telles situations, l'apex de la goutte ou de chacune des deux gouttes ne peut plus être distingué sur l'image formée après contact des deux gouttes entre elles ou après contact de la goutte sur la surface solide.

Par conséquent, la mesure de la tension interfaciale par la méthode de la goutte pendante est une technique physique connue qui trouve ses limites par la nécessité de connaitre de façon extrêmement précise l'apex de la goutte.

Dans le cas contraire, aucune mesure n'est possible.

L'analyse de telles situations pourrait cependant se révéler particulièrement intéressante car elle permettrait de modéliser différentes interfaces rencontrées dans la nature.

Par exemple, deux gouttes d'eau placées au contact l'une de l'autre forment une interface reproduisant sous certaines conditions une portion de membrane cellulaire d'une cellule vivante.

En effet, les cellules vivantes sont composées essentiellement de 65% à 90% d'eau et recouverte d'une bicouche de phospholipides.

Ainsi, lorsqu'une première goutte d'eau comprenant des tensio-actifs et préalablement recouverte d'une monocouche de phospholipides est mise au contact d'une deuxième goutte d'eau comprenant des tensio-actifs et préalablement également recouverte d'une monocouche de phospholipides alors au niveau du contact entre les deux gouttes se forme une bicouche de phospholipides qui s'apparente à une portion d'une membrane cellulaire d'une cellule vivante.

Dès lors, il serait possible d'étudier la diffusion d'un composé ou d'une molécule au travers cette membrane cellulaire, par exemple en fonction de la quantité de tensio-actifs, par exemple des protéines, présents dans l'une ou l'autre des deux gouttes d'eau.

Une autre de ces situations peut se présenter après la coalescence de deux gouttes et la formation d'un pont liquide.

Dans une telle situation, les deux gouttes et donc leur apex, disparaissent pour former un pont liquide.

Le temps mis pour la coalescence entre les deux gouttes peut également se révéler intéressant car il dépend de la différence de pression entre les deux gouttes et de la qualité de l'interface.

Cette différence de pression lorsqu'elle est mise en corrélation avec les valeurs de tension interfaciale des gouttes avant et après coalescence permet d'obtenir une information pertinente sur la stabilité de l'interface.

Cette information est tout particulièrement intéressante pour l'élaboration de mousses aqueuses dont la quantité d'air incorporé et donc la densité de bulles est une caractéristique importante.

Une autre de ces situations pourrait consister à suspendre une goutte à un tube capillaire, à amener cette goutte au contact d'une surface solide puis à exercer des contraintes sur la goutte en contact avec la surface solide.

Ici encore, l'apex de la goutte ne peut plus être distingué sur l'image formée après contact de la goutte avec la surface solide.

L'analyse d'une telle situation pourrait être utile pour étudier le mouillage de la goutte sur la surface solide ou bien déterminer à partir de quelle pression exercée sur la goutte, la goutte n'adopte plus un comportement Laplacien, autrement dit à partir de quelle pression exercée sur la goutte la pression interfaciale n'est plus considérée comme étant la même sur toute la surface de la goutte.

Il existe donc un besoin d'amélioration des procédés d'analyse existants afin de pouvoir réaliser des analyses dans lesquelles la position de l'apex ne peut plus être déterminé, comme c'est le cas lors de l'interaction d'une goutte avec une autre goutte ou alternativement lors de l'interaction d'une goutte avec une surface solide dans des situations ou bien des analyses dans lesquelles il n'y a plus d'apex, comme c'est le cas lors de la coalescence de deux gouttes et de la formation d'un pont liquide.

La présente invention a pour but de résoudre tout ou partie des inconvénients mentionnés ci-dessus.

Exposé de l'invention

A cet effet, la présente invention se rapporte à un dispositif de formation et de mise en contact de gouttes de fluides non miscibles dans un milieu ambiant comprenant :

- un premier tube capillaire comprenant une extrémité susceptible de déboucher dans le milieu ambiant et une portion d'extrémité rectiligne s'étendant verticalement depuis l'extrémité du tube capillaire,
- un premier ensemble pousse-seringue relié au premier tube capillaire et adapté pour :

  • véhiculer un premier fluide au travers le premier tube capillaire jusqu'à son extrémité, et
  • contrôler le volume d'une première goutte de premier fluide formée à l'extrémité du premier tube capillaire,

- un deuxième tube capillaire comprenant une extrémité susceptible de déboucher dans le milieu ambiant et une portion d'extrémité rectiligne s'étendant verticalement depuis l'extrémité du tube capillaire,
- un deuxième ensemble pousse-seringue relié au deuxième tube capillaire et adapté pour :

  • véhiculer un deuxième fluide au travers du deuxième tube capillaire jusqu'à son extrémité, et
  • contrôler le volume d'une deuxième goutte d'un deuxième fluide formée à l'extrémité du deuxième tube capillaire dans le milieu ambiant,

- des moyens de mise en contact des deux gouttes présentant un agencement relatif de l'extrémité du premier tube capillaire par rapport à l'extrémité du deuxième tube capillaire adapté pour mettre en contact les deux gouttes.

Cette disposition permet de former deux gouttes distinctes dans un milieu ambiant en vue de l'analyse ultérieure de l'interaction entre ces gouttes de fluides non miscibles dans un milieu ambiant.

La portion d'extrémité rectiligne qui s'étend verticalement depuis l'extrémité du tube capillaire considéré permet de conférer à la goutte suspendue au tube capillaire une symétrie de révolution.

Cette disposition permet également d'augmenter ou de diminuer le volume d'un pont liquide formé après coalescence des deux gouttes et de faire osciller l'interface en dilatation ou en compression par le contrôle du volume des deux gouttes.

La présente invention se rapporte également à un dispositif de formation et de mise en contact d'une goutte de fluide non miscibles dans un milieu ambiant avec une surface solide comprenant :

- un tube capillaire comprenant une extrémité susceptible de déboucher dans le milieu ambiant et une portion d'extrémité rectiligne s'étendant verticalement depuis l'extrémité du tube capillaire,
- un ensemble pousse-seringue relié au premier tube capillaire et adapté pour :

  • véhiculer un fluide au travers le premier tube capillaire jusqu'à son extrémité, et
  • contrôler le volume d'une goutte de premier fluide formée à l'extrémité du premier tube capillaire,

- des moyens de mise en contact de la goutte présentant un agencement relatif de l'extrémité du tube capillaire par rapport à la surface solide adapté pour mettre en contact la goutte et la surface solide.

Cette disposition permet de former une goutte dans un milieu ambiant en vue de l'analyse ultérieure de l'interaction entre cette goutte de fluide non miscibles dans un milieu ambiant avec une surface solide.

La portion d'extrémité rectiligne qui s'étend verticalement depuis l'extrémité du tube capillaire permet de conférer à la goutte suspendue au tube capillaire une symétrie de révolution.

Selon un aspect de l'invention, les moyens de mise en contact comprennent des moyens de déplacement relatifs de l'extrémité du premier tube capillaire par rapport à l'extrémité du deuxième tube capillaire, le cas échéant les moyens de mise en contact comprennent des moyens de déplacement relatifs de l'extrémité du tube capillaire par rapport à la surface solide.

Les moyens de déplacement relatifs de l'extrémité du premier tube capillaire par rapport à l'extrémité du deuxième tube capillaire permettent de mettre en contact les deux gouttes lorsque les extrémités des deux tubes capillaires sont éloignées lors de la formation des deux gouttes.

En effet, si les extrémités des deux tubes capillaires sont déjà suffisamment proches alors l'augmentation de volume des deux gouttes lors de leur formation peut suffire à les mettre en contact.

Par tube capillaire, on entend la définition usuelle de ce terme, à savoir un tube très fin capable de maintenir une goutte en suspension grâce au phénomène de capillarité.

Selon un aspect de l'invention, la portion d'extrémité rectiligne du premier tube capillaire et la portion d'extrémité rectiligne du deuxième tube capillaire sont disposées selon un même axe, et l'extrémité du premier tube capillaire et l'extrémité du deuxième tube capillaire étant disposées en regard l'une de l'autre dans le milieu ambiant.

Cette disposition permet de former deux gouttes en regard l'une de l'autre afin de faciliter leur mise en contact au niveau de leur apex respectif

La première goutte est une goutte pendante et la deuxième goutte est une goutte montante.

Selon un deuxième mode de réalisation, la portion d'extrémité rectiligne du premier tube capillaire et la portion d'extrémité rectiligne du deuxième tube capillaire sont respectivement disposées selon deux axes sensiblement parallèles, et l'extrémité du premier tube capillaire et l'extrémité du deuxième tube capillaire étant disposées côte à côte dans le milieu ambiant.

Ce deuxième mode de réalisation permet d'étudier le comportement à l'interface de deux gouttes disposées côte-à-côte.

Selon un aspect de l'invention, les moyens de déplacement comprennent des moyens de déplacement en translation ou des moyens de déplacement en translation et en rotation de l'extrémité du premier tube capillaire par rapport à l'extrémité du deuxième tube capillaire.

Cette disposition permet de mettre en contact les deux gouttes à partir d'un simple mouvement de translation, et permet également d'étirer l'interface en modifiant la distance entre les deux tubes capillaires.

Bien entendu un seul des deux tubes capillaires peut être mis en mouvement alors que l'autre peut demeurer fixe.

Cette disposition permet également après mise en contact des deux gouttes de cisailler l'interface, par exemple en initiant un mouvement de rotation à un des deux tubes capillaires, l'autre demeurant fixe.

Selon un aspect de l'invention, l'extrémité du premier tube capillaire et le cas échéant l'extrémité du deuxième tube capillaire sont disposés dans une cuvette transparente.

Cette disposition permet de former des gouttes ou des bulles dans un milieu ambiant liquide.

Selon un aspect de l'invention, l'extrémité du premier tube capillaire et le cas échéant l'extrémité du deuxième tube capillaire sont disposés dans une enceinte thermostatique, le cas échéant la cuvette est disposée dans l'enceinte thermostatique.

Cette disposition permet de contribuer à l'équilibre thermodynamique des interfaces, qui dépend entre autres de la température.

Selon un aspect de l'invention, le premier tube capillaire comprend une aiguille disposée coaxialement à l'intérieur du premier tube capillaire et faisant saillie à l'extrémité du premier tube capillaire, et/ou le cas échéant le deuxième tube capillaire comprend une aiguille disposée coaxialement à l'intérieur du deuxième tube capillaire et faisant saillie à l'extrémité du deuxième tube capillaire.

Cette disposition permet d'injecter un ou des composés dans une goutte tout en conservant un volume de goutte constant.

La présente invention se rapporte également à un système d'analyse de l'interaction entre des gouttes de fluides non miscibles dans un milieu ambiant comprenant :

- un dispositif de formation et de mise en contact de gouttes tel que décrit précédemment,
- un dispositif d'acquisition et de traitement d'image adapté pour collecter des données relatives aux dimensions et à la forme du contour :

  - d'un profil individuel de la première goutte et d'un profil individuel de la deuxième goutte avant un contact entre la première goutte et la deuxième goutte, ou
  - d'un profil de contact de la première goutte et de la deuxième goutte résultant d'un contact entre la première goutte et la deuxième goutte, ou
  - d'un profil d'un pont liquide résultant de la coalescence entre la première goutte et la deuxième goutte, et

- des moyens de traitement adaptés pour déterminer en fonction des données collectées par le dispositif d'acquisition et de traitement d'image :

  - une valeur de tension interfaciale :

    - de la première goutte et de la deuxième goutte avant un contact entre la première goutte et la deuxième goutte, le cas échéant
    - de la première goutte et de la deuxième goutte après un contact entre la première goutte et la deuxième goutte, le cas échéant
    - du pont liquide résultant de la coalescence entre la première goutte et la deuxième goutte, et/ou

  - une valeur de différence de pression :

    - entre la pression interne de la première goutte et le milieu ambiant, et entre la pression interne de la deuxième goutte et le milieu ambiant, le cas échéant
    - entre la pression interne du pont liquide et le milieu ambiant.

Un tel système permet d'analyser l'interaction de gouttes de fluide par l'intermédiaire de leur valeur de tension interfaciale sans nécessité de devoir connaitre la position de l'apex de ces gouttes de fluide.

Un tel système permet également de remonter à la valeur de la tension interfaciale d'un pont liquide formé après coalescence des deux gouttes.

En outre, un tel système permet de connaître par une technique directe les différences de pression entre les deux gouttes et entre les deux gouttes et le milieu ambiant.

La présente invention se rapporte également en alternative à un système d'analyse de l'interaction d'une goutte de fluide non miscible avec une surface solide dans un milieu ambiant comprenant :

- un dispositif de formation et mise en contact d'une goutte avec une surface solide tel que décrit précédemment,
- un dispositif d'acquisition et de traitement d'image adapté pour collecter des images relatives aux dimensions et à la forme du contour :

  - d'un profil individuel de la goutte avant un contact entre la goutte et la surface solide,

- d'un profil de contact de la goutte résultant du contact entre la goutte et la surface solide,

- des moyens de traitement adaptés pour déterminer en fonction des données collectées par le dispositif d'acquisition et de traitement d'image :

  - une valeur de tension interfaciale :

    - de la goutte avant un contact entre la goutte et la surface solide, le cas échéant

    - de la goutte après un contact entre la goutte et la surface solide, et/ou

  - une valeur de différence de pression entre la pression interne de la goutte et la pression dans le milieu ambiant.

Cette alternative permet d'analyser l'interaction d'une goutte de fluide sur une surface solide par l'intermédiaire de sa valeur de tension interfaciale sans nécessité de devoir connaitre la position de l'apex de la goutte de fluide.

En outre, cette alternative permet également de connaître par une technique directe la différence de pression entre la pression interne de la goutte et la pression dans le milieu ambiant.

Selon un aspect de l'invention, le système comprend un premier capteur de pression adapté pour mesurer la pression dans le premier tube capillaire et, le cas échéant un deuxième capteur de pression adapté pour mesurer la pression dans le deuxième tube capillaire.

Cette disposition permet de mesurer des valeurs de pression interne de la goutte considérée lorsque la goutte n'adopte plus un comportement Laplacien, c'est-à-dire dans des situations où la pression interfaciale n'est plus considérée comme étant la même sur toute la surface de la goutte.

Ces capteurs peuvent donc être utilisés pour déterminer la différence de pression entre deux gouttes à partir de laquelle les deux gouttes entrent en coalescence.

Selon un aspect de l'invention, le dispositif d'acquisition et de traitement d'image comprend :

- une source de lumière montée sur un premier côté d'un banc optique, et
- une caméra montée sur un deuxième côté dudit banc optique,

le dispositif de formation de gouttes étant disposé dans l'alignement du banc d'optique entre la source de lumière et la caméra.

Cette disposition permet d'obtenir une image très contrastée permettant d'optimiser la définition des contours d'une forme sur une image.

La présente invention se rapporte également à un procédé d'analyse de l'interaction entre des gouttes de fluides non miscibles dans un milieu ambiant, comportant les étapes suivantes :

- disposer d'un système d'analyse tel que décrit précédemment pour l'analyse de l'interaction entre deux gouttes,
- former une première goutte d'un premier fluide à l'extrémité d'un premier tube capillaire disposée dans le milieu ambiant,
- former une deuxième goutte d'un deuxième fluide à l'extrémité d'un deuxième tube capillaire disposée dans le milieu ambiant,
- déplacer l'extrémité du premier tube capillaire par rapport à l'extrémité du deuxième tube capillaire jusqu'au contact de la première goutte et de la deuxième goutte,
- déterminer une fonction d'erreur quadratique minimisée à l'aide des moyens de traitement pour obtenir une meilleure valeur des quatre paramètres $(b, c, R_0, q_0)$ d'une courbe Laplacienne associée à la fonction objective $L(b, c, R_0, q_0)$, ladite fonction d'erreur quadratique minimisée caractérisant l'écart entre un profil expérimental et un meilleur profil théorique d'un contour du profil de la goutte,

si les valeurs des quatre paramètres sont telles que cet écart est inférieur à un seuil d'applicabilité prédéterminé alors déterminer à l'aide des moyens de traitement :

- une valeur de tension interfaciale de la première goutte et de la deuxième goutte après un contact entre la première goutte et la deuxième goutte, et/ou le cas échéant, une valeur de tension interfaciale du pont liquide résultant de la coalescence entre la première goutte et la deuxième goutte, et
- les valeurs des pressions internes dans la première goutte et la deuxième goutte, et/ou le cas échéant la valeur de la pression interne dans le pont liquide

sinon,

déterminer une valeur de différence de pression entre la pression interne de la première goutte et le milieu ambiant, et entre la pression interne de la deuxième goutte et le milieu ambiant à l'aide de capteurs de pression adaptés pour mesurer la pression dans le premier tube capillaire et dans le deuxième tube capillaire.

Cette disposition permet de déterminer des valeurs de tension interfaciale et de pression interne sur des gouttes pour lesquelles la position de l'apex ne peut être déterminée.

Cette disposition permet également de déterminer des valeurs de tension interfaciale et de pression interne sur des ponts liquides formés suite à la coalescence des deux gouttes.

Cette disposition permet également de déterminer une fonction d'erreur quadratique minimisée qui fournit à l'opérateur une information pertinente sur les conditions expérimentales de l'analyse et donc sur la pertinence des valeurs de tension interfaciale et de pression interne déterminées par les moyens de traitement.

La présente invention se rapporte également en alternative à un procédé d'analyse de l'interaction d'une goutte de fluide non miscible avec une surface solide dans un milieu ambiant, comportant les étapes suivantes :

- disposer d'un système d'analyse tel que décrit précédemment pour l'analyse entre une goutte et une surface solide,
- former une goutte de fluide à l'extrémité d'un premier tube capillaire disposée dans le milieu ambiant,
- déplacer l'extrémité du premier tube capillaire par rapport à la surface solide jusqu'au contact de la goutte avec la surface solide,
- déterminer une fonction d'erreur quadratique minimisée à l'aide des moyens de traitement pour obtenir une meilleure valeur des quatre paramètres $(b,c,R_0, q_0)$ d'une courbe Laplacienne associée à la fonction objective $L(b,c,R_0,q_0)$, ladite fonction d'erreur quadratique minimisée caractérisant l'écart entre un profil expérimental et un meilleur profil théorique d'un contour du profil de la goutte,

si les valeurs des quatre paramètres sont telles que cet écart est inférieur à un seuil d'applicabilité prédéterminé alors déterminer à l'aide des moyens de traitement :

- une valeur de tension interfaciale de la goutte après un contact entre la goutte et la surface solide, et
- une valeur de différence de pression entre la pression interne de la goutte et la pression dans le milieu ambiant,

sinon,

déterminer une valeur de différence de pression entre la pression interne de la goutte et la pression dans le milieu ambiant à l'aide d'un capteur de pression adapté pour mesurer la pression dans le premier tube capillaire.

Cette disposition permet de déterminer des valeurs de tension interfaciale et de pression interne sur une goutte pour laquelle la position de l'apex ne peut être déterminée.

Cette disposition permet également de déterminer une fonction d'erreur quadratique minimisée qui fournit à l'opérateur une information pertinente sur les conditions expérimentales de l'analyse et donc sur la pertinence des valeurs de tension interfaciale et de pression interne déterminées par les moyens de traitement.

Selon une mise en oeuvre du procédé, la première goutte présente une première valeur de tension interfaciale et la deuxième goutte présente une deuxième valeur de tension interfaciale différente de la première valeur avant contact entre la première goutte et la deuxième goutte, ledit procédé comprenant en outre une étape consistant à réitérer au moins une étape consistant à déterminer une valeur de tension interfaciale de la première goutte et de la deuxième goutte après un contact entre la première goutte et la deuxième goutte.

Cette disposition permet d'analyser l'influence d'une première goutte sur l'évolution dans le temps de la tension interfaciale d'une deuxième goutte au cours du contact entre ces deux gouttes.

Selon une mise en oeuvre du procédé, le procédé comporte en outre une étape consistant à chronométrer après contact entre la première goutte et la deuxième goutte, le temps mis pour obtenir la coalescence entre la première goutte et la deuxième goutte.

Cette disposition permet d'établir une classification de fluides en fonction de leur aptitude à coalescer ou non avec d'autres fluides.

Selon une mise en oeuvre du procédé, le procédé comporte des étapes consistant à :

- augmenter ou diminuer le volume du pont liquide,
- étirer l'interface du pont liquide avec le milieu ambiant en modifiant la distance entre l'extrémité du premier tube capillaire et l'extrémité du deuxième tube capillaire, ou
- cisailler l'interface du pont liquide en tournant l'extrémité du premier tube capillaire par rapport à l'extrémité du deuxième tube capillaire.

Cette disposition permet de contrôler la variation de la tension interfaciale du pont liquide en fonction de contraintes exercées sur le dit pont liquide.

Selon une mise en oeuvre du procédé, les étapes consistant à déterminer une fonction d'erreur quadratique minimisée, une valeur de tension interfaciale et une valeur de pression interne de la goutte à l'aide des moyens de traitements comprennent les opérations suivantes :

- définir au moins une zone d'analyse optique d'un contour à partir d'une image d'un profil de contact de la première goutte et de la deuxième goutte résultant d'un contact entre la première goutte et la deuxième goutte, et/ou le cas échéant à partir d'une image d'un profil d'un pont liquide résultant de la coalescence entre la première goutte et la deuxième goutte ou alternativement à partir d'une image d'un profil d'une goutte résultant d'un contact entre la goutte et une surface solide,
- extraire de l'image la position de points expérimentaux du contour du profil de la première goutte et/ou de la deuxième goutte, et/ou le cas échéant de points expérimentaux du contour du profil du pont liquide ou alternativement de points expérimentaux de la goutte,
- à partir des points expérimentaux, réaliser une première estimation de :

  • l'angle polaire $q_0$ de la tangente orientée en $M_0$ point situé sur le plan de référence définissant un axe horizontal $O_x$,
  • $R_0$ le rayon de courbure dans un plan orthogonal à l'axe de révolution et passant par l'axe $O_x$
  • la courbure moyenne b au point $M_0$,
  • la constante de capillarité c à l'interface entre le fluide considéré et le milieu ambiant,

- appliquer un algorithme pour déduire de la première estimation des quatre paramètres ($b,c,R_0,q_0$) et de l'acquisition des points expérimentaux du contour du profil, une deuxième estimation optimisée des quatre paramètres ($b,c,R_0,q_0$) par une approximation optimisée du contour du profil de la première goutte et/ou de la deuxième goutte, et/ou le cas échéant du contour du profil du pont liquide ou alternativement du profil de la goutte par une courbe Laplacienne associée à la fonction objective ($b,c,R_0,q_0$) solution de l'équation différentielle E :

$$(4)[E]:\begin{cases} \dfrac{dx}{ds} = \cos\theta \\[2mm] \dfrac{dz}{ds} = \sin\theta \\[2mm] \dfrac{d\theta}{ds} = 2b - \dfrac{\sin\theta}{x} - cz \end{cases}$$

avec pour conditions initiales au point $M_0$:

$$[EC_0]:\begin{cases} x(0) = R_0 \\ z(0) = 0 \\ \theta(0) = \theta_0 \end{cases}$$

- déterminer la fonction d'erreur quadratique minimisée, et le cas échéant déterminer la valeur de tension interfaciale et la valeur de pression interne de la première et/ou de la deuxième goutte, ou le cas échéant du pont liquide ou alternativement de la goutte en fonction de l'approximation optimisée obtenue à l'étape précédente.

Cette disposition permet de déterminer de manière précise et reproductible une valeur de tension interfaciale d'une goutte ou d'un pont liquide à partir d'un contour du profil sans apex.

Selon une mise en oeuvre du procédé, la fonction d'erreur quadratique minimisée est déterminée par dérivation automatique de programme pour utiliser une méthode de minimisation conjuguée avec une méthode de résolution numérique de l'équation différentielle [E].

Cette disposition permet de résoudre l'équation différentielle [E] pour des valeurs différentes de quartets des quatre paramètres ($b,c,R_0,q_0$) pour déterminer lequel de ces quartets minimise le plus la fonction d'erreur quadratique.

La méthode de minimisation utilise une méthode dite de Newton-Raphson tandis que la méthode de résolution de l'équation différentielle [E] utilise une méthode dite de Bragg-Stoer-Bulirsch.

Selon une mise en oeuvre du procédé, l'au moins une zone d'analyse optique d'un contour du profil est sélectionnée entre un premier axe horizontal situé à proximité de l'interface entre les deux gouttes et un deuxième axe horizontal situé à proximité de l'extrémité du premier tube capillaire pour une mesure sur la première goutte ou à proximité de l'extrémité du deuxième tube capillaire pour une mesure sur la deuxième goutte, et/ou le cas échéant l'au moins une zone d'analyse optique d'un contour du profil est sélectionné entre un premier axe horizontal situé à proximité de l'extrémité du deuxième tube capillaire et un deuxième axe horizontal situé à proximité de l'extrémité du premier tube capillaire, ou alternativement l'au moins une zone d'analyse optique d'un contour du profil est sélectionnée entre un premier axe horizontal situé à proximité de la surface solide et un deuxième axe horizontal situé à proximité de l'extrémité du premier tube capillaire.

Cette disposition permet de définir une zone d'analyse avec un maximum de points du contour du profil, ce qui optimise davantage l'approximation qui est faite sur les points du contour du profil.

Selon une mise en oeuvre du procédé, l'extraction sur l'image de la position de points expérimentaux du contour du profil comprend un seuillage obtenu à partir d'un histogramme des niveaux de gris et une sous-pixellisation par une méthode dite de Spline d'approximation.

Cette sous-pixellisation permet d'obtenir une précision de la position d'un point sur une image au-delà de la valeur du pixel, idéalement à une résolution de 0.1 pixel.

Cette disposition permet de détecter facilement et très précisément la position du contour du profil par un traitement du signal de l'image.

La présente invention se rapporte également à une application du système d'analyse de l'interaction entre des gouttes de fluides non miscibles dans un milieu ambiant tel que décrit précédemment et/ou une application du procédé d'analyse de l'interaction entre des gouttes de fluides non miscibles dans un milieu ambiant tel que décrit précédemment pour l'analyse d'une membrane cellulaire.

Une telle application permet de modéliser une portion de membrane cellulaire d'une cellule vivante et permet donc par exemple d'étudier l'interaction entre une molécule déterminée et la portion de membrane cellulaire ainsi formée ainsi que son influence ou non sur la tension interfaciale et la pression interne de la goutte dans laquelle la molécule est injectée.

La présente invention se rapporte également à une application d'un système d'analyse de l'interaction d'une goutte de fluide non miscible dans un milieu ambiant avec une surface solide tel que décrit précédemment et/ou du procédé d'analyse de l'interaction d'une goutte de fluide non miscible dans un milieu ambiant avec une surface solide tel que décrit précédemment pour l'analyse d'une goutte d'hydrocarbure.

Cette disposition permet de modéliser une interface entre une goutte d'hydrocarbure et une surface solide, et permet donc d'étudier par exemple le mouillage de la goutte sur la surface solide en fonction de la nature des molécules déterminées injectées dans la goutte ou bien de déterminer à partir de quelle pression interne la goutte n'adopte plus un comportement Laplacien.

Description détaillée

D'autres avantages et caractéristiques de l'invention ressortiront mieux à la lecture de la description détaillée de l'invention faite à titre illustratif et non limitatif en référence aux figures qui illustrent tout ou partie d'un système d'analyse de l'interaction entre des gouttes de fluides selon l'invention.

La figure 1 illustre un premier mode de réalisation d'un dispositif de formation de gouttes de fluides non miscibles dans un milieu ambiant selon l'invention.

La figure 2 montre un système d'analyse de l'interaction entre des gouttes de fluides non miscibles dans un milieu ambiant selon l'invention comprenant un dispositif de formation de gouttes selon le premier mode de réalisation de la figure 1.

La figure 3 montre l'image de la forme du profil de deux gouttes avant contact.

La figure 4 montre l'image de la forme du profil de deux gouttes en contact.

La figure 5 montre l'image de la forme du profil du pont liquide formé après coalescence entre les deux gouttes.

La figure 6 montre l'image de la forme de profil du pont liquide après compression.

La figure 7 illustre l'injection d'un composé dans une goutte en maintenant un volume de goute constant.

La figure 8 montre l'image de la forme du profil de deux gouttes en contact formés par un dispositif de formation de gouttes selon un deuxième mode de réalisation dans lequel les deux tubes capillaires sont disposés côte-à-côte.

La figure 9 montre l'image de la forme du profil d'une goutte en contact avec une surface solide selon une alternative au système d'analyse illustré à la figure 2.

La figure 10 illustre le positionnement de capteurs de pression utilisés pour obtenir une mesure directe des pressions internes des gouttes formées aux extrémités des tubes capillaires.

La figure 11 illustre le principe d'acquisition d'un point sur le contour du profil d'une goutte ou d'un pont liquide selon l'invention.

La figure 12 illustre la projection de points expérimentaux sur une courbe théorique d'approximation pour l'application d'un procédé d'analyse selon l'invention.

La figure 13 illustre une zone d'analyse optique sur une courbe théorique d'approximation de la forme d'un contour du profil pour l'application d'un procédé d'analyse selon l'invention.

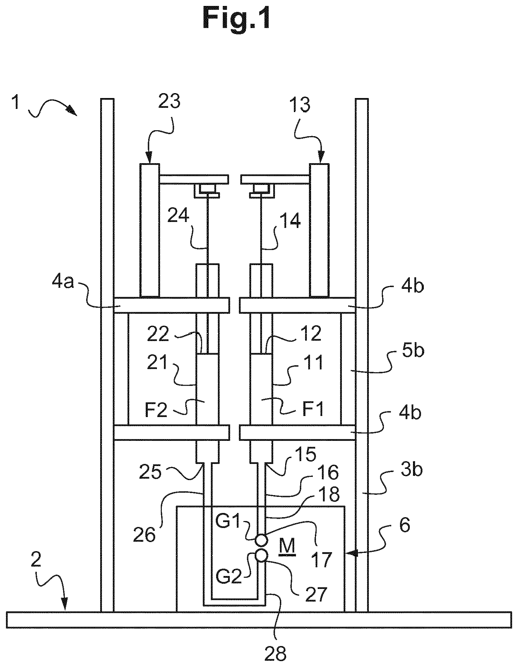

Comme illustré à la figure 1, un dispositif 1 de formation de gouttes de fluides non miscibles dans un milieu ambiant M comprend un châssis 2 comportant un premier montant 3a supportant un premier ensemble 4a de traverses, et un deuxième montant 3b supportant un deuxième ensemble de traverses 4b.

Le premier ensemble 4a de traverses et le deuxième ensemble 4b de traverses sont adaptés pour supporter respectivement un premier ensemble pousse-seringue 10 et un deuxième ensemble pousse-seringue 20.

Chaque ensemble 4a, 4b de traverses est mobile en translation selon la direction verticale par rapport aux montants 3a, 3b qui les supportent.

Ces mouvements en translation sont gérés avec une grande précision par des moyens de déplacement 5a, 5b.

Ces moyens de déplacement 5a, 5b comprennent par exemple des moteurs pas-à-pas reliés à un système pignon-crémaillère.

Le premier ensemble pousse-seringue 10 comprend un cylindre 11 adapté pour contenir un premier fluide F1 et un piston 12 ajusté au diamètre du cylindre 11 et mobile en translation de façon étanche à l'intérieur du cylindre 11.

Le mouvement du piston 12 est géré avec une grande précision par des moyens de déplacement 13 reliés au piston 12 par une tige 14.

Ces moyens de déplacement 13 comprennent par exemple un moteur pas-à-pas relié à un système vis-écrou.

Le cylindre 11 comprend un passage 15 relié de manière étanche à un premier tube capillaire 16.

Le premier tube capillaire 16 présente une extrémité 17 débouchant dans le milieu ambiant M ainsi qu'une portion d'extrémité rectiligne 18 s'étendant verticalement depuis cette extrémité 17.

De même, le deuxième ensemble pousse-seringue 20 comprend un cylindre 21 adapté pour contenir un deuxième fluide F2 et un piston 22 mobile en translation de façon étanche à l'intérieur du cylindre 21.

Le mouvement du piston 22 est géré avec une grande précision par des moyens de déplacement 23 reliés au piston 22 par une tige 24.

Ces moyens de déplacement 23 comprennent par exemple un moteur pas-à-pas relié à un système vis-écrou.

Le cylindre 21 comprend un passage 25 relié de manière étanche à un deuxième tube capillaire 26.

Le deuxième tube capillaire 26 présente une extrémité 27 débouchant dans le milieu ambiant M ainsi qu'une portion d'extrémité rectiligne 28 s'étendant verticalement depuis cette extrémité 27.

Ainsi, l'actionnement des moyens de déplacement 13, 23 permet de former une première goutte G1 et une deuxième goutte G2 de fluide respectivement à l'extrémité 17 du premier tube capillaire 16 et à l'extrémité 27 du deuxième tube capillaire 26 dans le milieu ambiant M avec un contrôle précis du volume des gouttes G1, G2.

La première goutte G1 et la deuxième goutte G2 présentent une symétrie de révolution autour d'un axe de symétrie qui coïncide avec l'axe de symétrie de la portion d'extrémité rectiligne 18, 28 du tube capillaire 16, 26 considéré.

Enfin, selon un premier mode de réalisation, l'extrémité 17 du premier tube capillaire 16 et l'extrémité 27 du deuxième tube capillaire 26 sont disposées en regard l'une de l'autre dans le milieu ambiant M.

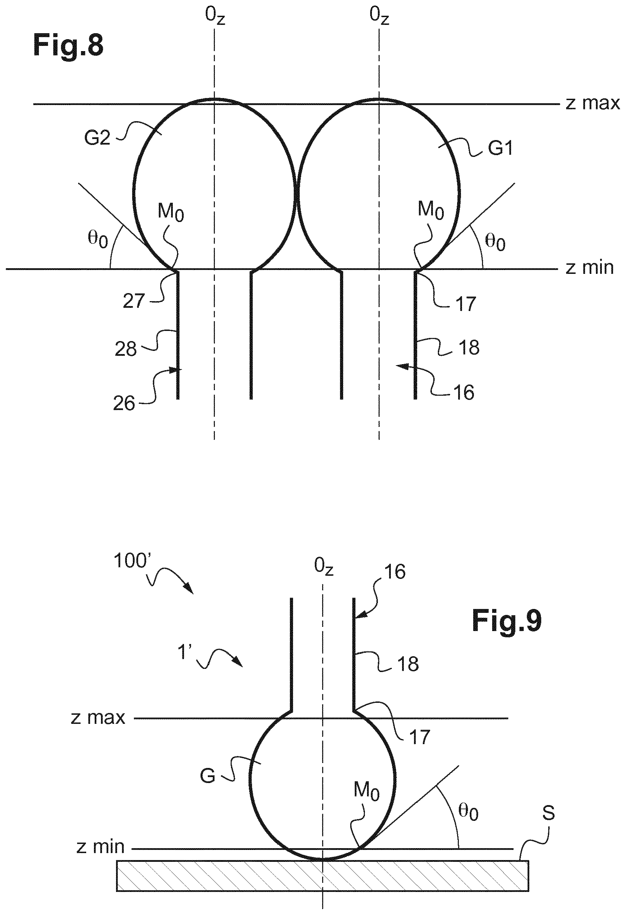

Dans un deuxième mode de réalisation illustré à la figure 8, la portion d'extrémité rectiligne 18 du premier tube capillaire 16 et la portion d'extrémité rectiligne 28 du deuxième tube capillaire 26 sont respectivement disposées selon deux axes sensiblement parallèles, l'extrémité 17 du premier tube capillaire 16 et l'extrémité 27 du deuxième tube capillaire 26 étant disposées côte-à-côte dans le milieu ambiant M.

L'actionnement d'un et/ou des deux moyens de déplacement 5a, 5b permet quant à lui de contrôler avec une grande précision le déplacement relatif en translation de l'extrémité 17 du premier tube capillaire 16 par rapport à l'extrémité 27 du deuxième tube capillaire 26.

Des moyens de déplacement en rotation (non illustrés) de l'extrémité d'un tube capillaire par rapport à l'autre pourraient également être envisagés pour analyser le comportement de l'interface entre deux gouttes lorsque l'interface est soumise à une contrainte de cisaillement.

Le milieu ambiant M dans lequel sont formées ces gouttes G1, G2 est un fluide, c'est-à-dire que le milieu ambiant M peut être soit un gaz, par exemple de l'air, soit un liquide, par exemple de l'eau.

Ce milieu ambiant M est transparent, c'est-à-dire que le milieu ambiant M permet une visualisation du contour du profil des gouttes G1, G2 formées aux extrémités 17, 27 des tubes capillaires 16, 26.

Dans le cas où le milieu ambiant M est un liquide alors le dispositif 1 comprend une cuvette transparente 6 susceptible de contenir le liquide.

Cette cuvette 6 peut également être utilisée lorsque le milieu ambiant M est un gaz autre que de l'air, la cuvette 6 est alors étanche de manière à retenir ce gaz.

Bien entendu, la cuvette 6 peut également être utilisée lorsque le milieu ambiant M est l'air. Dans ce cas, l'étanchéité de la cuvette 6 n'est pas nécessaire.

Les extrémités 17, 27 des tubes capillaires 16, 26, et le cas échéant la cuvette 6, sont disposées dans une enceinte thermostatique (non illustré) de manière à garantir une température constante du milieu ambiant M et donc un équilibre thermodynamique.

Il peut également être envisagé de disposer les cylindres 11, 21 dans une enceinte thermostatique de manière à garantir une température constante des fluides F1, F2 dans les cylindres 11, 21.

Les fluides F1, F2 ne sont pas miscibles dans le milieu ambiant M et peuvent être de même nature ou pas.

Typiquement, on dit de deux fluides F1, F2 qu'ils sont de même nature lorsque le premier fluide F1 est le même fluide que le deuxième fluide F2.

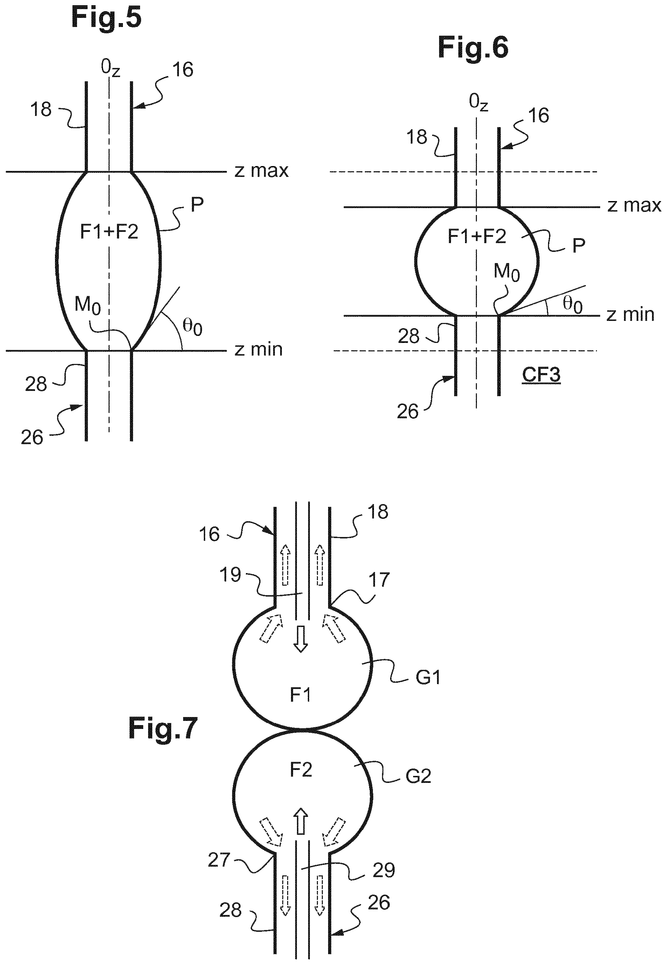

Dans une variante illustrée partiellement à la figure 7, le premier tube capillaire 16 comprend une aiguille creuse 19 disposée coaxialement à l'intérieur du premier tube capillaire 16 et faisant saillie à l'extrémité 17 du premier tube capillaire 16.

De même, le deuxième tube capillaire 26 comprend une aiguille creuse 29 disposée coaxialement à l'intérieur du deuxième tube capillaire 26 et faisant saillie à l'extrémité 27 du deuxième tube capillaire 26.

Ces aiguilles creuses 19, 29 peuvent chacune être reliée à un ensemble pousse-seringue telle que les ensembles pousse- seringue 10, 20 décrits précédemment.

En couplant l'ensemble pousse-seringue relié à une aiguille creuse 19, 29 à l'ensemble pousse-seringue 10, 20 relié au tube capillaire 16, 26 dans lequel est disposé l'aiguille creuse 19, 29 considérée, il devient possible d'injecter par l'aiguille creuse 19, 29 un fluide comprenant une composition différente, un marqueur spécifique ou un tensio-actif à l'intérieur d'une goutte G1, G2 et d'aspirer simultanément une partie du fluide formant la goutte G1, G2 de manière à conserver un volume constant de la goutte G1, G2.

Lorsque le milieu ambiant M est liquide, il est également possible d'injecter directement dans le milieu ambiant M des compositions différentes ou des tensio-actifs de manière à pourvoir analyser le comportement des gouttes à leur interface avec le milieu ambiant M.

Les tensio-actifs auront ainsi tendance à augmenter la surface des gouttes G1, G2 et donc à modifier leur contour de profil tout en maintenant leur volume constant.

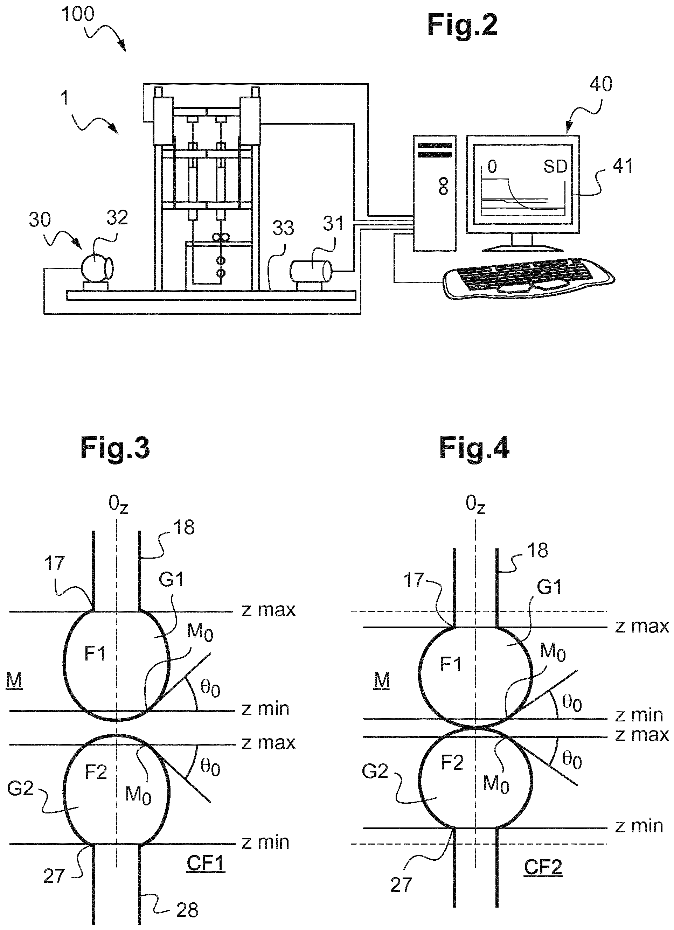

Comme illustré à la figure 2, un système 100 d'analyse de l'interaction entre des gouttes G1, G2 de fluides F1, F2 non miscibles dans un milieu ambiant M comprend un dispositif 1 de formation de gouttes G1, G2 tel que décrit précédemment.

En outre, le système 100 comprend également un dispositif 30 d'acquisition et de traitement d'image et des moyens de traitement 40.

Le dispositif 30 d'acquisition et de traitement d'image comprend une source de lumière 31 et une caméra 32 montées sur un même banc d'optique 33.

La source de lumière 31 produit une lumière diffuse apte à éclairer de manière contrastée les extrémités 17, 27 des tubes capillaires 16, 26.

A cet effet, cette source de lumière 31 est placée sur un premier côté du banc optique 33 alors que la caméra est placée sur un deuxième côté du banc optique 33, le dispositif 1 de formation de gouttes étant disposé dans l'alignement du banc d'optique 33 entre la source de lumière 31 et la caméra 32.

La caméra 32 permet ainsi l'acquisition de données sur le profil des gouttes G1, G2 dans un plan sensiblement transversal à l'axe d'alignement du banc optique 33.

La caméra 32 présente une résolution d'au moins 1920x1200 pixels et des vitesses d'acquisition d'images pouvant aller jusqu'à 50 images par seconde, ce qui lui permet d'optimiser l'acquisition d'images.

Comme illustré aux figures 3 à 5, l'utilisation du dispositif 1 de formation de gouttes G1, G2 permet d'obtenir plusieurs configurations d'analyse de l'interaction entre des gouttes G1, G2 de fluides F1, F2 non miscibles dans un milieu ambiant M.

Comme illustré à la figure 3, le dispositif 1 de formation de gouttes permet d'établir une première configuration PC1 dans laquelle une première goutte G1 formée à l'extrémité 17 du premier tube capillaire 16 et une deuxième goutte G2 formée à l'extrémité 27 du deuxième tube capillaire 26 sont distantes l'une de l'autre.

Dans cette première configuration CF1, il n'y a pas d'interactions entre les deux gouttes G1, G2.

Dans cette première configuration CF1, le dispositif 30 d'acquisition et de traitement d'image est alors adapté pour collecter des données relatives aux dimensions et à la forme du contour du profil de la première goutte G1 et des données relatives aux dimensions à la forme du contour du profil de la deuxième goutte G2.

Ces données peuvent être recueillies et donc traitées simultanément.

Comme illustré à la figure 4, le dispositif 1 de formation de gouttes permet d'établir une deuxième configuration CF2 dans laquelle la première goutte G1 formée à l'extrémité 17 du premier tube capillaire 16 et la deuxième goutte G2 formée à l'extrémité 27 du deuxième tube capillaire 26 sont en contact.

Dans cette deuxième configuration CF2, le dispositif 30 d'acquisition et de traitement d'image est alors adapté pour collecter des données relatives aux dimensions et à la forme du contour du profil issu du contact de la première goutte G1 et de la deuxième goutte G2.

Comme illustré aux figures 5 et 6, le dispositif 1 de formation de gouttes permet d'établir une troisième configuration CF3 dans laquelle la première goutte G1 formée à l'extrémité 17 du premier tube capillaire 16 et la deuxième goutte G2 formée à l'extrémité 27 du deuxième tube capillaire 26 disparaissent après coalescence.

Dans cette troisième configuration CF3, le dispositif 30 d'acquisition et de traitement d'image est alors adapté pour collecter des données relatives à la forme du contour du profil d'un pont liquide P résultant de la coalescence de la première goutte G1 et de la deuxième goutte G2.

Ce pont P peut également être un pont gazeux lorsque le premier fluide F1 et le deuxième fluide F2 sont un gaz et que le milieu ambiant M est liquide.

Les moyens de traitements 40 comprennent quant à eux un ordinateur 41 adapté pour exécuter un algorithme de calcul.

L'algorithme de calcul se base sur les données qui lui sont transmises par le dispositif 30 d'acquisition et de traitement d'image pour déterminer les valeurs de tension interfaciale de la première goutte G1 et/ou de la deuxième goutte G2 en contact ou pas, et de la tension interfaciale du pont liquide P formé après coalescence des deux gouttes G1, G2.

Un tel système 100 est adapté pour mettre en oeuvre un procédé d'analyse de l'interaction entre des gouttes G1, G2 de fluides non miscibles dans un milieu ambiant M.

Au cours de ce procédé, l'opérateur commence tout d'abord par actionner les moyens de déplacement 13, 23 de manière à former la première goutte G1 et la deuxième goutte G2 respectivement aux extrémités 17, 27 du premier tube capillaire 16 et du deuxième tube capillaire 26

Le dispositif 1 de formation de gouttes se trouve alors dans la première configuration CF 1 illustrée à la figure 3.

Dans cette première configuration CF1, l'opérateur peut procéder à une analyse de la première goutte G1 et de la deuxième goutte G2 de manière à déterminer la valeur de leur tension interfaciale respective.

L'opérateur actionne ensuite les moyens de déplacement 5a, 5b pour amener le dispositif 1 dans sa deuxième configuration CF2 illustrée à la figure 4.

Dans cette deuxième configuration CF2, l'opérateur peut procéder à une analyse de la première goutte G1 et de la deuxième goutte G2 de manière à déterminer la valeur de leur tension interfaciale respective lorsque les gouttes G1 et G2 sont en interaction l'une avec l'autre.

Cette analyse peut être réitérée plusieurs fois au cours du temps de manière à déterminer la stabilité dans le temps de la valeur de la tension interfaciale de la première goutte G1 et de la deuxième goutte G2 surtout si ces valeurs étaient très différentes avant le contact.

Cette analyse peut également être réitérée plusieurs fois en modifiant à chaque fois la position relative des deux tubes capillaires 16, 26, de manière à appliquer sur l'interface une compression lorsque les deux extrémités 17, 27 sont davantage rapprochées, un étirement lorsque les deux extrémités 17, 27 sont davantage éloignées ou bien un cisaillement lorsque les deux extrémités 17, 27 sont tournées l'une par rapport à l'autre.

L'opérateur a ensuite la possibilité de rapprocher davantage les extrémités 17, 27 des deux tubes capillaires 16, 26 de manière à provoquer la coalescence des deux gouttes G1, G2.

La coalescence des deux gouttes G1, G2 peut également survenir spontanément au cours du temps sans qu'il n'ait été nécessaire de rapprocher davantage les extrémités 17, 27 des deux tubes capillaires 16, 26.

Le temps mis pour la coalescence des deux gouttes G1, G2, qui dépend de la différence de pression entre les deux fluides F1, F2, peut d'ailleurs être mesuré et mise en corrélation avec les valeurs des tensions interfaciales des deux gouttes G1, G2 de manière à fournir une information en ce qui concerne la stabilité de l'interface.

Cette information est particulièrement intéressante pour l'élaboration d'une mousse aqueuse.

Le dispositif 1 de formation de gouttes se trouve alors dans la troisième configuration CF3 illustrée aux figures 5 et 6.

Dans cette troisième configuration, l'opérateur peut procéder à une analyse du pont liquide P formé après la coalescence des deux gouttes G1, G2 de manière à déterminer la valeur de sa tension interfaciale.

Comme dans la deuxième configuration CF2, l'opérateur peut également réitérer plusieurs fois cette analyse en appliquant différentes contraintes à l'interface avec le milieu ambiant M.

La figure 6 montre un pont liquide P sur lequel on a appliqué une compression.

La figure 9 montre quant à elle une goutte G de fluide F disposée au contact d'une surface solide S dans un milieu ambiant et dont l'analyse peut être réalisée par un système d'analyse 100' se présentant comme une alternative au système 100 d'analyse décrit dessus.

Ce système d'analyse 100' ne comprend pas un dispositif 1 de formation de deux gouttes comme dans le système précédemment décrit mais un dispositif 1' de formation d'une seule goutte G.

Ce dispositif 1' de formation de goutte G comprend un tube capillaire 16 et un ensemble pousse-seringue 10 identiques au premier tube capillaire 16 et au premier ensemble pousse-seringue du dispositif 1 de formation de deux gouttes G1, G2.

En outre, l'extrémité 27 du deuxième tube capillaire 26 et la deuxième goutte G2 sont remplacées par une surface solide S.

Le système 100' conserve les moyens de déplacement 13 qui permettent d'amener la goutte G au contact de la surface solide S ainsi que le dispositif 30 d'acquisition et de traitement d'image.

Le dispositif 30 d'acquisition et de traitement d'image est ici adapté pour collecter des images relatives aux dimensions et à la forme du contour d'un profil individuel de la goutte G avant un contact entre la goutte G et la surface solide S, et à la forme du contour d'un profil de contact de la goutte G résultant du contact entre la goutte G et la surface solide S.

Avant contact le système 100' présente une configuration d'analyse analogue à la première configuration d'analyse CF1 et après le contact le système 100' présente une configuration d'analyse analogue à la deuxième configuration d'analyse CF2 décrites ci-dessus en référence au système 100 d'analyse de l'interaction entre des gouttes G1, G2 de fluides F1, F2 non miscibles dans un milieu ambiant M.

Pour pouvoir déterminer une valeur de tension interfaciale au cours de ces différentes analyses, les moyens de traitement 40 réalisent plusieurs opérations.

Ces opérations sont ici décrites en référence à un système 100 d'analyse de l'interaction entre des gouttes G1, G2 de fluides F1, F2 non miscibles dans un milieu ambiant M mais s'applique par analogie à un système 100' d'analyse de l'interaction entre une goutte G et une surface solide S.

Le principe consiste à modéliser tous les points du contour de la goutte le long de l'abscisse curviligne s et à procéder par approximations successives, jusqu'à trouver une valeur de tension interfaciale pour laquelle la forme théorique de la goutte est aussi proche que possible de la forme réelle.

Ainsi, à partir de l'image transmise par le dispositif 30 d'acquisition et de traitement d'image sur l'écran de l'ordinateur 41, l'opérateur commence par définir manuellement une zone d'analyse optique d'un contour du profil de l'image d'une goutte G, G1, G2 ou d'un pont optique P ou bien des deux gouttes G1, G2 simultanément.

Pour cela, l'opérateur définit un premier axe $z_{min}$ et un deuxième axe $z_{max}$.

Ce premier axe $z_{min}$ et ce deuxième axe $z_{max}$ sont horizontaux sur l'image et transversaux à l'axe $O_z$ de symétrie de la goutte G, G1, G2 ou du pont liquide P.

Dans la deuxième configuration d'analyse CF2, et à condition que l'axe de symétrie $O_z$ de la première goutte G1 soit parfaitement aligné avec l'axe de symétrie $O_z$ de la deuxième goutte G2 alors l'opérateur peut définir à la fois une première zone d'analyse optique pour la première goutte G1 et une deuxième zone d'analyse pour la deuxième goutte G2.

L'alignement de ces deux axes de symétrie est obtenu par l'alignement des portions d'extrémité rectilignes 18, 28 verticales du premier tube capillaire 16 et du deuxième tube capillaire 26, notamment en utilisant les moyens de déplacement 13, 23.

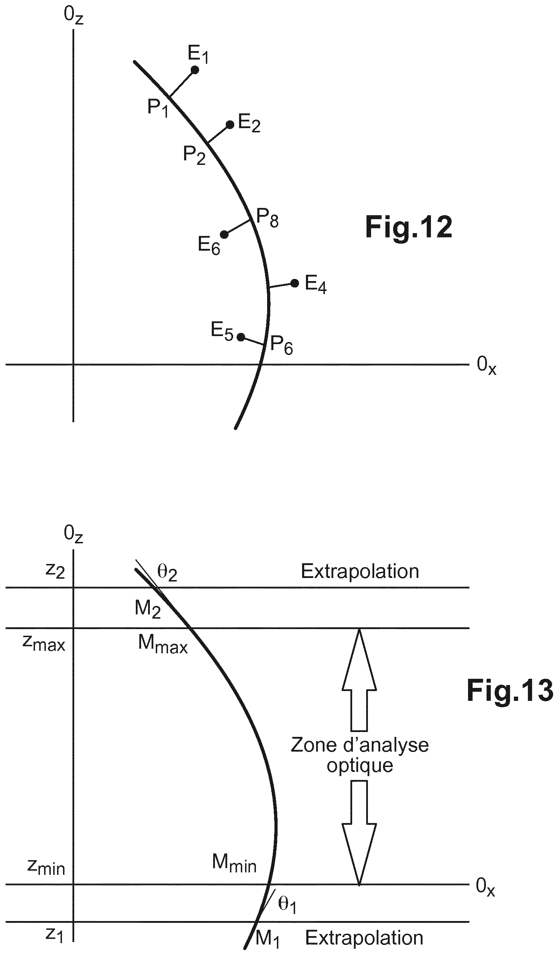

Un exemple de zone d'analyse optique est illustré à la figure 13.

Une fois cette zone d'analyse optique définie, l'algorithme va extraire de l'image, la position de points expérimentaux du contour du profil se trouvant dans la zone d'analyse optique.

Cette extraction est obtenue par un seuillage local à partir d'un histogramme des niveaux de gris et une sous-pixellisation par une méthode dite de Spline d'approximation.

Ce seuillage consiste à utiliser le gradient des niveaux de gris dans les quatre directions fondamentales (0°, 45°, 90° et 135°) pour déterminer le contour du profil à une précision de l'ordre de 0,1 à 0,2 pixel.

Le bruit électronique sur un objet fixe est de l'ordre de 0,1 pixel et il est sensiblement gaussien.

A partir des points expérimentaux, les moyens de traitement 40 repèrent de façon empirique la position d'un point $M_0$ de coordonnées $M_0\{s = 0, x = R_0, z = 0\}$.

Le point $M_0$ est donc situé à l'intersection du contour du profil expérimental et de l'axe horizontal $O_x$.

La position de ce point $M_0$ permet aux moyens de traitement 40 de déterminer une première estimation de :

- l'angle polaire $\theta_0$ de la tangente orientée en $M_0$ point situé sur le plan de référence définissant un axe horizontal $O_x$,
- $R_0$ le rayon de courbure dans un plan orthogonal à l'axe de révolution et passant par l'axe $O_x$,
- la courbure moyenne b au point $M_0$,
- la constante de capillarité c à l'interface entre le fluide F1, F2 considéré et le milieu ambiant M.

Cette première estimation des quatre paramètres $(b, c, R_0, q_0)$ définie des conditions d'initialisation permettant à l'algorithme exécuté par l'ordinateur 41 d'obtenir un premier contour de profil théorique.

Pour cela, en partant de l'équation (3), si on écrit :

$$\frac{d}{dx}\left(x \sin \theta\right) = 2bx - cxz$$

$$M_0 \left\{ s = 0, x = R_0, z = 0 \right\}$$

et qu'on intègre en x entre 0 et x il vient après un changement de variable et une intégration par parties :

$$2 \int_{z_0}^{z} zx\,dz = x^2 z - x_0^2 z_0 - \int_{z_0}^{z} x^2 dz$$

Où on reconnait le calcul du volume car :

$$Vol(z) = \int_{z_0}^{z} \pi x^2 dz$$

On en déduit la formule :

$$x \sin\theta = bx^2 + \frac{c}{2}(V(z) - x^2 z)$$

Cette formule peut s'écrire pour toute une série de mesures, tel que :

$$(5) \qquad \forall i, A(V(z_i) - x_i^2 z_i) + Bx_i^2 = x_i \sin\theta_i$$

L'algorithme détermine ensuite pour chaque valeur de $z_i$ sur le contour du profil les valeurs de $x_i$ de $\theta_i$ et par intégration numérique la valeur de $V(z_i)$, par exemple par la méthode des trapèzes.

Pour estimer les valeurs de $\theta$ le long du contour, l'algorithme lisse ensuite le profil par une méthode de splines d'approximation.

L'algorithme réalise ainsi une régression linéaire pour calculer les variables A et B de l'équation (5) puis remonter aux coefficients b et c.

L'estimation initiale de $R_0$ et $q_0$ se fait par le même argument géométrique vu que $R_0 = x_0$ en considérant que le premier point est celui situé sur la première ligne d'analyse soit $x_0 = R_0$, $z_0 = 0$

Les moyens de traitement 40 déterminent ensuite un écart entre les points expérimentaux et les points de ce premier profil théorique.

Comme illustré à la figure 12, tout point expérimental $E_i$ est projeté orthogonalement sur la courbe Laplacienne associée à la fonction objective $L(b,c,R_0,\theta_0)$ en un point Pi repéré sur la courbe théorique par son abscisse curviligne $s_i$ que l'on calcule par minimisation de la fonction carrée de la distance $\Phi(s)$ :

$$\Phi(s) = (x(s) - X_i)^2 + (z(s) - Z_i)^2$$

La distance entre la courbe théorique Laplacienne associée à la fonction objective $L(b, c, R_0, \theta_0)$ et les points expérimentaux est prise au sens quadratique et fournie la fonction objective :

$$L(b,c,R_0,\theta_0) = \frac{1}{2} \sum_i (x(s) - X_i)^2 + (z(s) - Z_i)^2$$

Cette fonction objective représente une fonction d'erreur quadratique entre le premier profil théorique et les points expérimentaux.

Les moyens de traitement 40 vont donc chercher à minimiser cette fonction d'erreur quadratique pour déterminer les meilleures valeurs des quatre paramètres $(b,c,R_0,q_0)$ et donc la meilleure courbe Laplacienne associée à la fonction objective $L(b,c,R_0,\theta_0)$ d'approximation des points expérimentaux et solution de l'équation différentielle (4) :

$$[E]: \begin{cases} \dfrac{dx}{ds} = \cos\theta \\[2mm] \dfrac{dz}{ds} = \sin\theta \\[2mm] \dfrac{d\theta}{ds} = 2b - \dfrac{\sin\theta}{x} - cz \end{cases}$$

avec pour conditions initiales au point $M_0$:

$$[EC_0]: \begin{cases} x(0) = R_0 \\ z(0) = 0 \\ \theta(0) = \theta_0 \end{cases}$$

Pour le calcul de cette fonction d'erreur minimisée, l'algorithme s'appuie sur une dérivation automatique de programme basée à la fois sur la méthode de résolution d'équation différentielle avec conditions initiales Bragg-Stoer-Bulirsch et une optimisation non linéaire par la méthode de Newton-Raphson et permet d'obtenir une deuxième estimation optimisée des quatre paramètres $(b, c, R_0, \theta_0)$ par une approximation du contour du profil de la première goutte G1 et/ou de la deuxième goutte G2, et/ou le cas échéant du contour du profil du pont liquide P avec une courbe Laplacienne associée à la fonction objective $L(b, c, R_0, \theta_0)$ à savoir la solution de l'équation de Laplace définie par l'équation différentielle (4) en prenant pour conditions initiales :

$$[EC_0]: \begin{cases} x(0) = R_0 \\ z(0) = 0 \\ \theta(0) = \theta_0 \end{cases}$$

Si les valeurs des quatre paramètres $(b, c, R_0, \theta_0)$ sont telles que l'écart entre le profil expérimental et un meilleur profil théorique d'un contour du profil de la goutte G, G1, G2 est inférieur à un seuil d'applicabilité prédéterminé alors les moyens de traitement 40 déterminent ensuite une valeur de tension interfaciale de la goutte G, G1, G2, ou du pont liquide P ainsi qu'une valeur de différence de pression entre la pression interne de la goutte G, G1, G2 et la pression dans le milieu ambiant M.

Dans le cas où les valeurs des quatre paramètres $(b, c, R_0, \theta_0)$ sont telles que cet écart est supérieur au seuil d'applicabilité prédéterminé alors une valeur de différence de pression entre la pression interne de la goutte G, G1, G2, le cas échéant du pont liquide P, et la pression dans le milieu ambiant M est réalisé à l'aide de capteurs de pression 7a, 7b adaptés pour mesurer la pression dans le premier tube capillaire 16 et le cas échéant dans le deuxième tube capillaire 26.

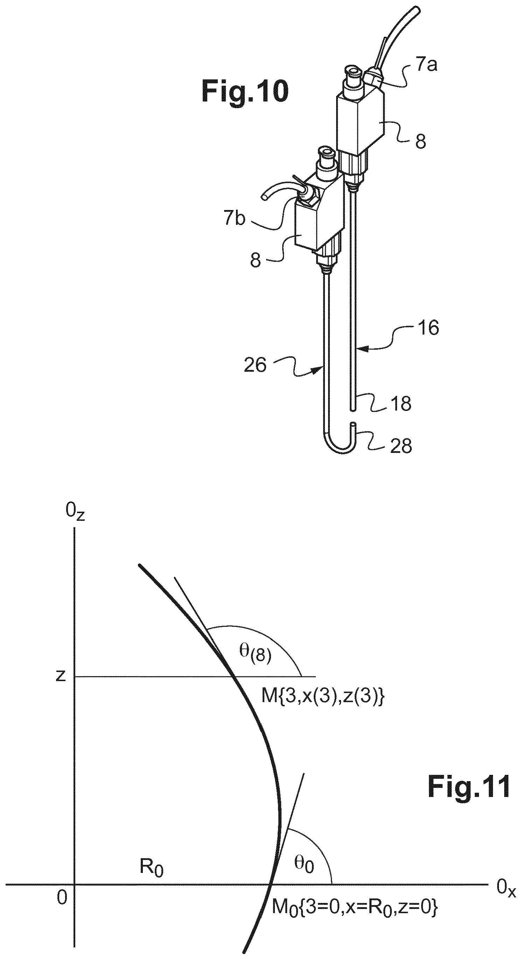

Comme illustré à la figure 10, ces capteurs de pression 7a, 7b sont reliés à un té de connexion 8 inséré entre les tubes capillaires 16, 26 et les ensembles pousse-seringue 10, 20.

Les moyens de traitement 40 retournent outre les valeurs des paramètres b, c, $R_0$, $\theta_0$ et une courbe Laplacienne associée à la fonction objective $L(b, c, R_0, \theta_0)$ optimisée, la liste des erreurs standards entre les points expérimentaux et le meilleur contour du profil, ainsi que le volume, la surface et les angles de contact de la goutte ou du pont liquide aux différence points d'abscisse curviligne s.

En outre, l'algorithme est également capable de déterminer ces valeurs par extrapolation sur des points situés entre deux plans d'altitude $z_1$ et $z_2$ allant au-delà des deux plans $z_{min}$, $z_{max}$ délimitant la zone d'analyse optique.

La présente invention peut présenter diverses applications industrielles, ou de recherche notamment dans le secteur du pétrole et dans les sciences de la vie.

Dans le secteur du pétrole, les interactions entre gouttes sont importantes à caractériser dans les processus de récupération assistée du pétrole dans lesquels des gouttes sont déplacées les unes par les autres dans les milieux poreux.

Il s'agit par exemple de caractériser la rencontre eau/pétrole pour consolider l'interface.

Le procédé selon l'invention permet d'étudier l'interaction entre deux gouttes G1, G2 de nature différente et analyse le comportement de l'interface.

Le procédé permet également d'atteindre la stabilité des interfaces entre des milieux de même nature, par exemple des huiles pétrolières, et des films ainsi formés pour pouvoir remonter à la stabilité des émulsions pétrolières.

La force du procédé réside dans sa capacité à pouvoir mesurer de manière quantitative l'interaction de deux fluides et de pouvoir modéliser les phénomènes réels.

Une collecte de nouvelles données est maintenant possible en tension et en rhéologie des films interfaciaux sous des contraintes, par exemple des contraintes de cisaillement.

Dans les sciences de la vie, la deuxième configuration CF2 du dispositif 1 de formation de gouttes permet de former une interface de contact entre la première goutte G1 et la deuxième goutte G2.

Cette interface peut sous certaines conditions se rapprocher de la composition d'une portion de membrane cellulaire d'une cellule vivante.

Une membrane cellulaire comprend essentiellement une bicouche phospho lipidique.

Les phospholipides sont des structures amphiphiles présentant une tête hydrophile et de deux queues hydrophobes adjacentes.

Les phospholipides ont un comportement semblable à celui des tensio-actifs qui migrent à l'interface.

Dans une membrane cellulaire les phospholipides forment une bicouche dans lequel les queux hydrophobes des phospholipides d'une première couche sont disposées en regard des queux hydrophobes des phospholipides d'une deuxième couche alors que les têtes hydrophiles des phospholipides de la première couche sont disposées en opposition par rapport aux têtes hydrophiles des phospholipides de la deuxième couche.

Dès lors, si une première goutte G1 de fluide contenant des tensio-actifs est mise en contact avec une deuxième goutte G2 contenant des tensio-actifs alors une partie des tensio-actifs présents initialement à l'interface des deux gouttes G1, G2 avec le milieu ambiant M, vont s'organiser à l'interface entre la première goutte G1 et la deuxième G2 pour former une bicouche de tensio-actif avec un même arrangement que celui que l'on peut trouver dans une membrane cellulaire.

A l'équilibre, on obtient donc un modèle d'une portion de membrane cellulaire.

Ce modèle de portion de membrane cellulaire peut être mis en oeuvre pour reproduire le comportement de certaines molécules au contact d'une membrane cellulaire, par exemple le principe actif d'un médicament.

A partir d'un dispositif 1 de formation de gouttes tel qu'illustré à la figure 5, il est ainsi possible d'injecter dans la première goutte G1 un volume de fluide F1 comprenant une molécule C par l'intermédiaire de l'aiguille creuse tout en conservant un volume de goutte G1 constant en aspirant simultanément un volume équivalent de fluide F1 par l'intermédiaire du premier tube capillaire 16.

Bien entendu, selon une variante la molécule pourrait également être injectée dans la deuxième goutte G2.

La molécule peut alors migrer vers l'interface entre la première goutte G1 et la deuxième goutte G2.

Il est alors possible de déterminer l'influence de cette molécule sur la tension interfaciale de la première goutte G1 et de déterminer la capacité de cette molécule à traverser l'interface entre la première goutte G1 et la deuxième goutte G2.

Cette capacité de diffusion au travers l'interface entre la première goutte G1 et la deuxième goutte G2 peut être déterminée à partir de la variation de la tension interfaciale de la deuxième goutte G2 ou bien à partir de la détection d'un marqueur de la molécule, par exemple un marqueur fluorescent.

Lors de l'injection de la molécule dans le fluide F1 de la première goutte G1, la molécule peut également ne pas migrer vers l'interface, ce qui fournit également une information importante à propos de l'efficacité de la molécule.

L'objectif peut également consister à élaborer une molécule qui ne modifie pas la tension interfaciale de la première goutte G1 et de la deuxième goutte G2 lors de sa diffusion au travers l'interface.

Ainsi, ce procédé peut être mis oeuvre pour quantifier la stabilité des interfaces en contact entre une molécule et :

- un transporteur,
- son environnement avec tout type de milieu physiologique, par exemple du plasma, du liquide synoviale, du surfactant pulmonaire, de la lymphe, du liquide céphalorachidien, de la salive,
- tout type cellulaire,
- tout type de membrane cellulaire,
- tout type d'épithélium,
- tout type d'organelle cellulaire.

Le procédé d'analyse selon l'invention peut également être mis oeuvre pour quantifier la stabilité des interfaces en contact entre un transporteur (carrier) et :

- son environnement en milieu physiologique,
- une cellule,
- une membrane cellulaire,

- des organelles.

Bien que l'invention ait été décrite en relation à des exemples particuliers de réalisation ou de mises en oeuvre particulières du procédé, d'autres variantes et améliorations de l'invention peuvent être envisagées sans pour autant sortir du cadre de l'invention.

**Revendications**

1. Dispositif (1) de formation et de mise en contact de gouttes (G1, G2) de fluides (FI, F2) non miscibles dans un milieu ambiant (M) comprenant :

   - un premier tube capillaire (16) comprenant une extrémité (17) susceptible de déboucher dans le milieu ambiant (M) et une portion (18) d'extrémité rectiligne s'étendant verticalement depuis l'extrémité (17) du tube capillaire (16),
   - un premier ensemble pousse-seringue (10) relié au premier tube capillaire (16) et adapté pour :

     • véhiculer un premier fluide (F1) au travers le premier tube capillaire (16) jusqu'à son extrémité (17), et
     • contrôler le volume d'une première goutte (G1) de premier fluide (F1) formée à l'extrémité (17) du premier tube capillaire (16),

   - un deuxième tube capillaire (26) comprenant une extrémité (27) susceptible de déboucher dans le milieu ambiant (M) et une portion (28) d'extrémité rectiligne s'étendant verticalement depuis l'extrémité (27) du tube capillaire (26),
   - un deuxième ensemble pousse-seringue (20) relié au deuxième tube capillaire (26) et adapté pour :

     • véhiculer un deuxième fluide (F2) au travers du deuxième tube capillaire (26) jusqu'à son extrémité (27), et
     • contrôler le volume d'une deuxième goutte (G2) d'un deuxième fluide (F2) formée à l'extrémité (27) du deuxième tube capillaire (26) dans le milieu ambiant (M),

   - des moyens de mise en contact des deux gouttes (G1, G2) présentant un agencement relatif de l'extrémité (17) du premier tube capillaire (16) par rapport à l'extrémité (27) du deuxième tube capillaire (26) adapté pour mettre en contact les deux gouttes (G1, G2)

   dispositif dans lequel le premier tube capillaire (16) comprend une aiguille creuse (19) disposée coaxialement à l'intérieur du premier tube capillaire (16) et faisant saillie à l'extrémité (17) du premier tube capillaire (16), et/ou le cas échéant le deuxième tube capillaire (26) comprend une aiguille creuse (29) disposée coaxialement à l'intérieur du deuxième tube capillaire (26) et faisant saillie à l'extrémité (27) du deuxième tube capillaire (26).

2. Dispositif (1') de formation et de mise en contact d'une goutte (G) de fluides (F) non miscible dans un milieu ambiant (M) avec une surface solide (S) comprenant :

   - un tube capillaire (16) comprenant une extrémité (17) susceptible de déboucher dans le milieu ambiant (M) et une portion (18) d'extrémité rectiligne s'étendant verticalement depuis l'extrémité (17) du tube capillaire (16),
   - un ensemble pousse-seringue (10) relié au tube capillaire (16) et adapté pour :

     • véhiculer un fluide (F) au travers le tube capillaire (16) jusqu'à son extrémité (17), et
     • contrôler le volume d'une goutte (G) de fluide (F) formée à l'extrémité (17) du tube capillaire (16),

   - des moyens de mise en contact de la goutte (G) présentant un agencement relatif de l'extrémité (17) du tube capillaire (16) par rapport à la surface solide (S) adapté pour mettre en contact la goutte (G) et la surface solide (S),

   dispositif dans lequel le tube capillaire (16) comprend une aiguille creuse (19) disposée coaxialement à l'intérieur du premier tube capillaire (16) et faisant saillie à l'extrémité (17) du tube capillaire (16).

3. Dispositif (1) selon l'une des revendications 1 ou 2, dans lequel la portion (18) d'extrémité rectiligne du premier tube capillaire (16) et la portion (28) d'extrémité rectiligne du deuxième tube capillaire (26) sont respectivement disposées selon deux axes sensiblement parallèles, et l'extrémité (17) du premier tube capillaire (16) et l'extrémité (27) du deuxième tube capillaire (26) étant disposées côte à côte dans le milieu ambiant (M).

4. Système (100) d'analyse de l'interaction entre des gouttes (G1, G2) de fluides (FI, F2) non miscibles dans un milieu ambiant (M) comprenant :

- un dispositif (1) de formation et de mise en contact de gouttes (G1, G2) l comprenant :

- un premier tube capillaire (16) comprenant une extrémité (17) susceptible de déboucher dans le milieu ambiant (M) et une portion (18) d'extrémité rectiligne s'étendant verticalement depuis l'extrémité (17) du tube capillaire (16),
- un premier ensemble pousse-seringue (10) relié au premier tube capillaire (16) et adapté pour :

• véhiculer un premier fluide (F1) au travers le premier tube capillaire (16) jusqu'à son extrémité (17), et
• contrôler le volume d'une première goutte (G1) de premier fluide (F1) formée à l'extrémité (17) du premier tube capillaire (16),

- un deuxième tube capillaire (26) comprenant une extrémité (27) susceptible de déboucher dans le milieu ambiant (M) et une portion (28) d'extrémité rectiligne s'étendant verticalement depuis l'extrémité (27) du tube capillaire (26),
- un deuxième ensemble pousse-seringue (20) relié au deuxième tube capillaire (26) et adapté pour :

• véhiculer un deuxième fluide (F2) au travers du deuxième tube capillaire (26) jusqu'à son extrémité (27), et
• contrôler le volume d'une deuxième goutte (G2) d'un deuxième fluide (F2) formée à l'extrémité (27) du deuxième tube capillaire (26) dans le milieu ambiant (M),

- des moyens de mise en contact des deux gouttes (G1, G2) présentant un agencement relatif de l'extrémité (17) du premier tube capillaire (16) par rapport à l'extrémité (27) du premier tube capillaire (16) par rapport à l'extrémité (27) du deuxième tube capillaire (26) adapté pour mettre en contact les deux gouttes (G1, G2) ;

- un dispositif (30) d'acquisition et de traitement d'image adapté pour collecter des données relatives aux dimensions et à la forme du contour :

• d'un profil individuel de la première goutte (G1) et d'un profil individuel de la deuxième goutte (G2) avant un contact entre la première goutte (G1) et la deuxième goutte (G2), ou
• d'un profil de contact de la première goutte (G1) et de la deuxième goutte (G2) résultant d'un contact entre la première goutte et la deuxième goutte (G2), ou
• d'un profil d'un pont liquide résultant de la coalescence entre la première goutte (G1) et la deuxième goutte (G2), et

- des moyens de traitement (40) adaptés pour déterminer en fonction des données collectées par le dispositif (30) d'acquisition et de traitement d'image :

- une valeur de tension interfaciale :

• de la première goutte (G1) et de la deuxième goutte (G2) avant un contact entre la première goutte (G1) et la deuxième goutte (G2), le cas échéant
• de la première goutte (G1) et de la deuxième goutte (G2) après un contact entre la première goutte (G1) et la deuxième goutte (G2), le cas échéant
• du pont liquide (P) résultant de la coalescence entre la première goutte (G1) et la deuxième goutte (G2), et/ou

- une valeur de différence de pression :

• entre la pression interne de la première goutte (G1) et le milieu ambiant(M) et entre la pression interne de la deuxième goutte (G2) et le milieu ambiant(M) le cas échéant
• entre la pression interne du pont liquide (P) et le milieu ambiant (M).

**5.** Système (100') d'analyse de l'interaction d'une goutte (G) de fluide (F1) non miscible avec une surface solide (S) dans un milieu ambiant (M) comprenant :

- un dispositif (1') de formation et de mise en contact d'une goutte avec une surface solide (S) comprenant :

- un tube capillaire (16) comprenant une extrémité (17) susceptible de déboucher dans le milieu ambiant (M) et une portion (18) d'extrémité rectiligne s'étendant verticalement depuis l'extrémité (17) du tube capillaire (16),
- un ensemble pousse-seringue (10) relié au tube capillaire (16) et adapté pour :

• véhiculer un fluide (F) au travers le tube capillaire (16) jusqu'à son extrémité (17), et
• contrôler le volume d'une goutte (G) de fluide (F) formée à l'extrémité (17) du tube capillaire (16),

- des moyens de mise en contact de la goutte (G) présentant un agencement relatif de l'extrémité (17) du tube capillaire (16) par rapport à la surface solide (S) adapté pour mettre en contact la goutte (G) et la surface solide (S) ;

- un dispositif (30) d'acquisition et de traitement d'image adapté pour collecter des images relatives aux dimensions et à la forme du contour :

• d'un profil individuel de la goutte (G) avant un contact entre la goutte (G) et la surface solide (S),
• d'un profil de contact de la goutte (G) résultant du contact entre la goutte (G) et la surface solide (S),

- des moyens de traitement (40) adaptés pour déterminer en fonction des données collectées par le dispositif (30) d'acquisition et de traitement d'image :

- une valeur de tension interfaciale:

• de la goutte (G) avant un contact entre la goutte (G) et la surface solide (S), le cas échéant
• de la goutte (G) après un contact entre la goutte (G) et la surface solide (S), et/ou

- une valeur de différence de pression entre la pression interne de la goutte (G) et la pression dans le milieu ambiant (M).

**6.** Système (100, 100') d'analyse selon l'une des revendications 4 ou 5, dans lequel le dispositif (30) d'acquisition et de traitement d'image comprend :

- une source de lumière (31) montée sur un premier côté d'un banc optique (33), et
- une caméra (32) montée sur un deuxième côté dudit banc optique (33),

le dispositif (1, 1') de formation de goutte(s) étant disposé dans l'alignement du banc d'optique (33) entre la source de lumière (31) et la caméra (32).

**7.** Procédé d'analyse de l'interaction entre des gouttes (G1, G2) de fluides non miscibles dans un milieu ambiant (M), comportant les étapes suivantes :

- disposer d'un système (100) d'analyse selon l'une des revendications 4 ou 6,
- former une première goutte (G1) d'un premier fluide (F1) à l'extrémité (17) d'un premier tube capillaire (16) disposée dans le milieu ambiant (M),
- former une deuxième goutte (G2) d'un deuxième fluide (F2) à l'extrémité (27) d'un deuxième tube capillaire (26) disposée dans le milieu ambiant (M),
- déplacer l'extrémité (17) du premier tube capillaire (16) par rapport à l'extrémité (27) du deuxième tube capillaire (26) jusqu'au contact de la première goutte (G1) et de la deuxième goutte (G2),
- déterminer une fonction d'erreur quadratique minimisée à l'aide des moyens de traitement (40) pour obtenir une meilleure valeur des quatre paramètres $(b,c,R_0,q_0)$ d'une courbe Laplacienne associée à la fonction objective $L(b,c,R_0,q_0)$, ladite fonction d'erreur quadratique minimisée caractérisant l'écart entre un profil expérimental et un meilleur profil théorique d'un contour du profil de la goutte (G1, G2),

si les valeurs des quatre paramètres sont telles que cet écart est inférieur à un seuil d'applicabilité prédéterminé alors déterminer à l'aide des moyens de traitement (40) :

- une valeur de tension interfaciale de la première goutte (G1) et de la deuxième goutte (G2) après un contact entre la première goutte (G1) et la deuxième goutte (G2), et/ou le cas échéant une valeur de tension interfaciale du pont liquide (P) résultant de la coalescence entre la première goutte (G1) et la deuxième goutte (G2), et
- les valeurs des pressions internes dans la première goutte (G1) et la deuxième goutte (G2), et/ou le cas échéant la valeur de la pression interne dans le pont liquide (P),

sinon,
déterminer une valeur de différence de pression entre la pression interne de la première goutte (G1) et le milieu ambiant (M), et entre la pression interne de la deuxième goutte (G2) et le milieu ambiant (M) à l'aide de capteurs de pression (7a, 7b) adaptés pour mesurer la pression dans le premier tube capillaire (16) et dans le deuxième tube capillaire (26).

8. Procédé d'analyse de l'interaction d'une goutte (G) de fluide (F) non miscible avec une surface solide (S) dans un milieu ambiant (M), comportant les étapes suivantes :

- disposer d'un système (100') d'analyse selon l'une des revendications 5 ou 6,
- former une goutte (G) de fluide (F) à l'extrémité (17) d'un tube capillaire (16) disposée dans le milieu ambiant (M),
- déplacer l'extrémité (17) du premier tube capillaire (16) par rapport à la surface solide (S) jusqu'au contact de la goutte (G) avec la surface solide (S),
- déterminer une fonction d'erreur quadratique minimisée à l'aide des moyens de traitement (40) pour obtenir une meilleure valeur des quatre paramètres $(b,c,R_0,q_0)$ d'une courbe Laplacienne associée à la fonction objective $L(b,c,R_0,q_0)$, ladite fonction d'erreur quadratique minimisée caractérisant l'écart entre un profil expérimental et un meilleur profil théorique d'un contour du profil de la goutte (G),

si les valeurs des quatre paramètres sont telles que cet écart est inférieur à un seuil d'applicabilité prédéterminé alors déterminer à l'aide des moyens de traitement (40) :

- une valeur de tension interfaciale de la goutte (G) après un contact entre la goutte (G) et la surface solide (S), et
- une valeur de différence de pression entre la pression interne de la goutte (G) et la pression dans le milieu ambiant (M),

sinon,
déterminer une valeur de différence de pression entre la pression interne de la goutte (G) et la pression dans le milieu ambiant (M) à l'aide d'un capteur de pression (7a) adapté pour mesurer la pression dans le tube capillaire (16).

9. Procédé selon la revendication 7, dans lequel la première goutte (G1) présente une première valeur de tension interfaciale et la deuxième goutte (G2) présente une deuxième valeur de tension interfaciale différente de la première valeur avant contact entre la première goutte (G1) et la deuxième goutte (G2), ledit procédé comprenant en outre une étape consistant à réitérer au moins une étape consistant à déterminer une valeur de tension interfaciale de la première goutte (G1) et de la deuxième goutte (G2) après un contact entre la première goutte (G1) et la deuxième goutte (G2).

10. Procédé selon l'une des revendications 7 ou 9, comportant en outre une étape consistant à chronométrer après contact entre la première goutte (G1) et la deuxième goutte (G2), le temps mis pour obtenir la coalescence entre la première goutte (G1) et la deuxième goutte (G2).

11. Procédé selon l'une des revendications 7 à 10, comportant des étapes consistant à :

- augmenter ou diminuer le volume du pont liquide (P),
- étirer l'interface du pont liquide (P) avec le milieu ambiant (M) en modifiant la distance entre l'extrémité (17) du premier tube capillaire (16) et l'extrémité (27) du deuxième tube capillaire (26), ou
- cisailler l'interface du pont liquide (P) en tournant l'extrémité (17) du premier tube capillaire (26) par rapport à l'extrémité (27) du deuxième tube capillaire (26).

12. Procédé selon l'une des revendications 7 à 11, dans lequel les étapes consistant à déterminer la fonction d'erreur quadratique minimisée, une valeur de tension interfaciale et une valeur de pression interne de la goutte (G, G1, G2) à l'aide des moyens de traitements (40) comprennent les opérations suivantes :

- définir au moins une zone d'analyse optique d'un contour du profil à partir d'une image d'un profil de contact de la première goutte (G1) et de la deuxième goutte (G2) résultant d'un contact entre la première goutte (G1) et la deuxième goutte (G2), et/ou le cas échéant à partir d'une image d'un profil d'un pont liquide (P) résultant de la coalescence entre la première goutte et la deuxième goutte (G2), ou alternativement à partir d'une image d'un profil d'une goutte (G) résultant d'un contact entre la goutte (G) et une surface solide (S),

- extraire de l'image la position de points expérimentaux du contour du profil de la première goutte (G1) et/ou de la deuxième goutte (G2), et/ou le cas échéant de points expérimentaux du contour du profil du pont liquide (P), ou alternativement de points expérimentaux de la goutte (G),

- à partir des points expérimentaux, réaliser une première estimation de :

• l'angle polaire $\theta_0$ de la tangente orientée en $M_0$ point situé sur le plan de référence définissant un axe horizontal $O_x$,
• $R_0$ le rayon de courbure dans un plan orthogonal à l'axe de révolution et passant par l'axe $O_x$,
• la courbure moyenne b au point $M_0$,
• la constante de capillarité c à l'interface entre le fluide (FI, F2) considéré et le milieu ambiant (M),

- appliquer un algorithme pour déduire de la première estimation des quatre paramètres $(b, c, R_0, q_0)$ et de l'acquisition des points expérimentaux du contour du profil une deuxième estimation optimisée des quatre paramètres $(b, c, R_0, q_0)$ par une approximation optimisée du contour du profil de la première goutte (G1) et/ou de la deuxième goutte (G2), et/ou le cas échéant du contour du profil du pont liquide (P) ou le cas échéant du profil de la goutte (G) par une courbe Laplacienne associée à la fonction objective $L(b, c, R_0, \theta_0)$ étant solution de l'équation différentielle E :

$$[E]:\begin{cases} \dfrac{dx}{ds} = \cos\theta \\[2mm] \dfrac{dz}{ds} = \sin\theta \\[2mm] \dfrac{d\theta}{ds} = 2b - \dfrac{\sin\theta}{x} - cz \end{cases}$$

avec pour conditions initiales au point $M_0$:

$$[EC_0]:\begin{cases} x(0) = R_0 \\ z(0) = 0 \\ \theta(0) = \theta_0 \end{cases}$$

- déterminer la fonction d'erreur quadratique minimisée, et le cas échéant la valeur de tension interfaciale et la valeur de pression interne de la première goutte (G1) et/ou de la deuxième goutte (G2), ou le cas échéant du pont liquide (P) ou alternativement de la goutte (G) en fonction de l'approximation optimisée obtenue à l'étape précédente.

**13.** Procédé selon la revendication 12, dans lequel l'au moins une zone d'analyse optique d'un contour du profil est sélectionné entre un premier axe horizontal situé à proximité de l'interface entre les deux gouttes (G1, G2) et un deuxième axe horizontal situé à proximité de l'extrémité du premier tube capillaire (16) pour une mesure sur la première goutte (G1) ou à proximité de l'extrémité du deuxième tube capillaire (26) pour une mesure sur la deuxième goutte (G2), et/ou le cas échéant l'au moins une zone d'analyse optique d'un contour du profil est sélectionné entre un premier axe horizontal situé à proximité de l'extrémité (27) du deuxième tube capillaire (26) et un deuxième axe horizontal situé à proximité de l'extrémité (17) du premier tube capillaire (16), ou alternativement l'au moins une zone d'analyse optique d'un contour du profil est sélectionnée entre un premier axe horizontal situé à proximité de la surface solide (S) et un deuxième axe horizontal situé à proximité de l'extrémité (17) du premier tube capillaire (16).

**14.** Application d'un système (100) d'analyse de l'interaction entre des gouttes (G1, G2) de fluides (FI, F2) non miscibles dans un milieu ambiant selon l'une des revendications 4 ou 6 et/ou une application du procédé d'analyse de l'interaction entre des gouttes (G1, G2) de fluides (FI, F2) non miscibles dans un milieu ambiant (M) selon l'une des revendications 7 ou 9 à 13 pourvu qu'elle se rapporte à la revendication 7, pour l'analyse d'une membrane cellulaire.

**15.** Application d'un système (100') d'analyse de l'interaction d'une goutte (G) de fluide (F1) non miscible dans un milieu ambiant (M) avec une surface solide (S) selon l'une des revendications 5 ou 6 et/ou du procédé d'analyse de l'interaction d'une goutte (G) de fluide (F1) non miscible dans un milieu ambiant (M) avec une surface solide (S) selon l'une des revendications 8 ou 10 à 13 pourvu qu'elle se rapporte à la revendication 18, pour l'analyse d'une goutte d'hydrocarbure.

EP 3 187 853 A1

# Fig.1

25

EP 3 187 853 A1

Fig.2

Fig.3

Fig.4

**Fig.5**

**Fig.6**

**Fig.7**

**Fig.8**

**Fig.9**

## Fig.10

7a

8

7b

8

16

26

18

28

## Fig.11

$0_z$

$\theta(8)$

z

$M\{3,x(3),z(3)\}$

$R_0$

$\theta_0$

0

$M_0\{3=0,x=R_0,z=0\}$

$0_x$

$0_z$

$E_1$

$P_1$

$E_2$

$P_2$

$P_8$

$E_6$

**Fig.12**

$E_4$

$E_5$

$P_6$

$0_x$

$0_z$

$z_2$    $\theta_2$      Extrapolation

$M_2$

$z_{max}$    $M_{max}$

**Fig.13**

Zone d'analyse
optique

$z_{min}$    $M_{min}$

$0_x$

$\theta_1$

$z_1$    $M_1$    Extrapolation

**Europäisches Patentamt**

**European Patent Office**

**Office européen des brevets**

# RAPPORT DE RECHERCHE EUROPEENNE

Numéro de la demande

EP 16 20 7230

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 7 235 405 B2 (CHARLES RAYMOND [FR] ET AL) 26 juin 2007 (2007-06-26)<br>* figures 1-3 *<br>* colonne 4, ligne 51 - colonne 5, ligne 11 *<br>* colonne 5, ligne 40 - ligne 67 *<br>* colonne 6, ligne 56 - ligne 63 *<br>* colonne 7, ligne 6 - colonne 8, ligne 13 *<br><br>----- | 4,7<br><br>1-3,6,<br>9-15 | INV.<br>G01N13/02 |
| Y | DE 102 33 696 A1 (SITA MESSTECHNIK GMBH [DE]; TECHNO COAT OBERFLAECHENTECHNI [DE]) 19 février 2004 (2004-02-19)<br>* figures 1-3 *<br>* alinéas [0018], [0026] - [0028] *<br><br>----- | 5,8 | |
| Y | US 2010/216128 A1 (DAVIES MARK [IE] ET AL) 26 août 2010 (2010-08-26)<br>* figures 1A-1G *<br>* alinéas [0036] - [0037], [0048] *<br><br>----- | 5,8 | |
| A | LABOURDENNE S ET AL: "The oil-drop tensiometer: potential applications for studying the kinetics of (phospho)lipase action",<br>CHEMISTRY AND PHYSICS OF LIPIDS, LIMERICK, IR,<br>vol. 71, no. 2, 23 mai 1994 (1994-05-23), pages 163-173, XP024783910,<br>ISSN: 0009-3084, DOI:<br>10.1016/0009-3084(94)90068-X<br>[extrait le 1994-05-23]<br>* alinéa [02.3]; figure 1 *<br><br>----- | 1-15 | |

DOMAINES TECHNIQUES RECHERCHES (IPC)

G01N

Le présent rapport a été établi pour toutes les revendications

| Lieu de la recherche | Date d'achèvement de la recherche | Examinateur |
|---|---|---|
| La Haye | 17 mai 2017 | Bockstahl, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 20 7230

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-05-2017

| Document brevet cité au rapport de recherche | | | Date de publication | Membre(s) de la famille de brevet(s) | | | Date de publication |
|---|---|---|---|---|---|---|---|
| US 7235405 | | B2 | 26-06-2007 | AT | 333650 | T | 15-08-2006 |
| | | | | EP | 1361442 | A1 | 12-11-2003 |
| | | | | FR | 2839504 | A1 | 14-11-2003 |
| | | | | JP | 2004004068 | A | 08-01-2004 |
| | | | | US | 2004022686 | A1 | 05-02-2004 |
| DE 10233696 | | A1 | 19-02-2004 | AUCUN | | | |
| US 2010216128 | | A1 | 26-08-2010 | EP | 2433126 | A1 | 28-03-2012 |
| | | | | US | 2010216128 | A1 | 26-08-2010 |
| | | | | WO | 2010133962 | A1 | 25-11-2010 |

EPO FORM P0460

Pour tout renseignement concernant cette annexe : voir Journal Officiel de l'Office européen des brevets, No.12/82